# EUROPEAN PATENT APPLICATION

(11) **EP 2 262 325 A2**
(43) Date of publication of application: **15.12.2010**
(21) Application number: 10165457.2
(22) Date of filing: 10.06.2010
(51) Int. Cl.: H04W 48/12

(54) **Apparatus and method for supporting simultaneous transmission of plural broadcast management messages in a wireless communication system**

(30) Priority: 12.06.2009 KR 20090052564; 24.06.2009 KR 20090056610; 26.08.2009 KR 20090079461; 27.10.2009 KR 20090102446
(71) Applicant: SAMSUNG ELECTRONICS CO., LTD., Suwon-si, Gyeonggi-do (KR)
(72) Inventor: Son, Yeong-Moon, Gyeonggi-do (KR); Taori, Rakesh, Gyeonggi-do (KR); Son, Jung-Je, Gyeonggi-do (KR); Kang, Hyun-Jeong, Seoul (KR)
(74) Representative: Grünecker, Kinkeldey, Stockmair & Schwanhäusser Anwaltssozietät

(57) **Abstract**

An apparatus and method for supporting simultaneous transmission of a plurality of broadcast management messages in a wireless communication system are provided. A method in a Base Station (BS) for supporting transmission of a broadcast management message in a wireless communication system includes generating one or more broadcast management messages whose transmission is required, and constructing an Advanced-MAP Information Element (A-MAP IE) of a number, which is predefined on the basis of a predefined position within a subframe, as a Broadcast A-MAP IE. Here, the Broadcast A-MAP IE comprises allocation information of a broadcast burst for transmission of the generated one or more broadcast management messages.

## Description

### BACKGROUND OF THE INVENTION

### 1. Field of the Invention:

The present invention relates to an apparatus and method for supporting simultaneous transmission of a plurality of broadcast management messages in a wireless communication system. More particularly, the present invention relates to an apparatus and method for supporting simultaneous transmission of a mobile traffic indication message and a mobile paging advertisement message in a wireless communication system.

### 2. Description of the Related Art:

In the 4^{th} Generation (4G) communication system, which is the next generation communication system, research is being conducted to provide users with services of various Qualities of Service (QoSs) having a data rate of about 100 Mbps. In particular, a study of the 4G communication system is now being made to support high-speed services in the way of guaranteeing mobility and QoS for a Broadband Wireless Access (BWA) communication system such as wireless Local Area Network (LAN) system and wireless Metropolitan Area Network (MAN) system. The typical 4G communication system is an Institute of Electrical and Electronics Engineers (IEEE) 802.16 communication system.

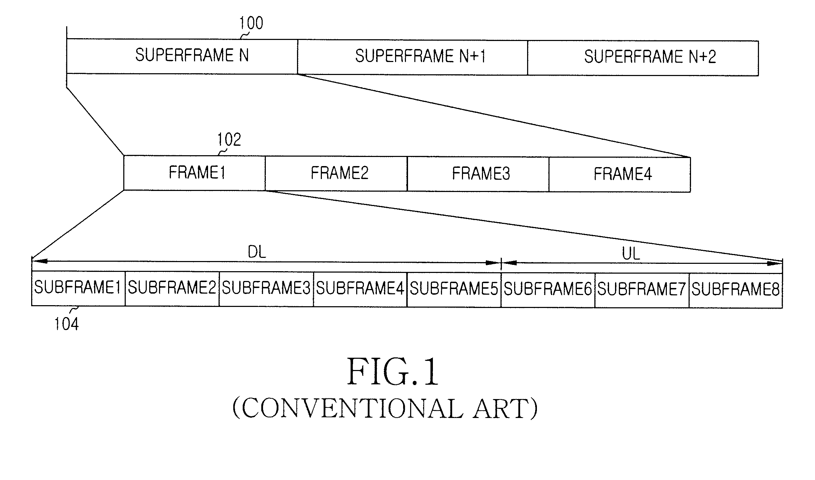

FIG. 1 is a diagram illustrating a frame structure of a conventional IEEE 802.16m system.

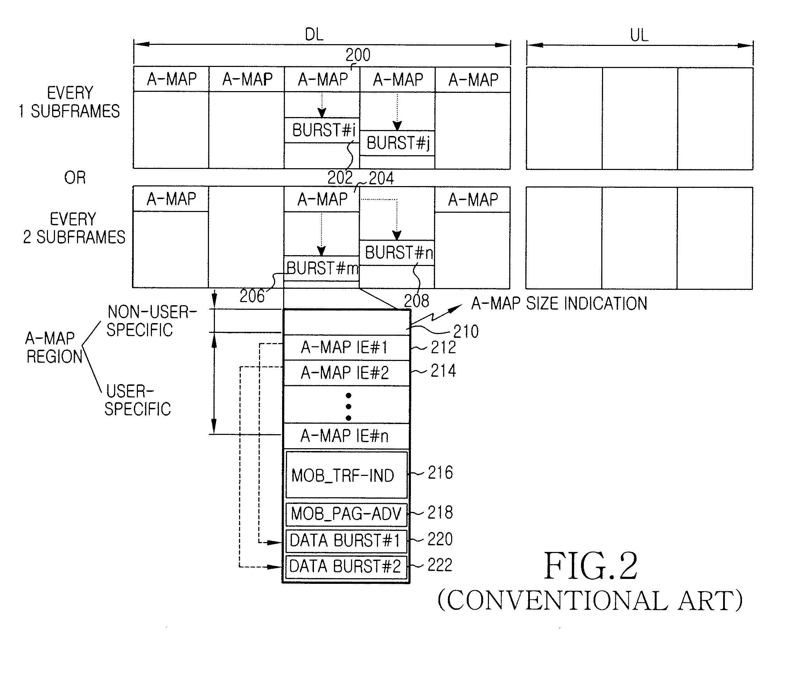

Referring to FIG. 1, the IEEE 802.16m frame structure is a hierarchical structure including superframes 100, frames 102, and subframes 104. The superframe 100, having a 20msec cycle, is constituted of four frames 102. Each frame 102 has a 5 msec cycle and is constituted of eight subframes 104. Each subframe 104 is constituted of a plurality of (e.g., six) Orthogonal Frequency Division Multiple Access (OFDMA) symbols (not shown). A DownLink (DL) interval is constituted of a plurality of (e.g., five) subframes positioned in front, and an UpLink (UL) interval is constituted of the remaining (e.g., three) subframes. Here, the DL interval and UL interval vary depending on whether the eight subframes 104 are divided on an N-point-to-N-point basis. A more detailed structure of the DL interval is described with reference to FIG. 2.

FIG. 2 is a diagram illustrating a frame structure of a conventional IEEE 802.16m system.

Referring to FIG. 2, in an upper portion of the DL interval, an Advanced (A)-MAP region 200 or 204 exists in every subframe or in every other subframe. The A-MAP region 200 or 204 is largely constituted of a 'Non-user-specific' field and a 'User-specific' field. The 'Non-user-specific' field transmits information 210 indicating the size of the A-MAP region 200 or 204. By means of the A-MAP size indication information 210, a Mobile Station (MS) can determine a boundary of the A-MAP region 200 or 204 within a subframe. Also, the 'User-specific' field transmits A-MAP Information Elements (IEs) 212 and 214. At least one DL data burst 202, 206, or 208 for transmission of a control message (i.e., a signaling message) or traffic is allocated to the remaining region excepting the A-MAP region 200 or 204 within the subframe. The allocation of the DL data burst 202, 206, or 208 in the subframe is accomplished by the A-MAP IEs 212 and 214 within the corresponding subframe. Here, the A-MAP IEs 212 and 214 include allocation information on corresponding data bursts 220 and 222. In more detail, the A-MAP IEs 212 and 214 transmitted every subframe include allocation information (i.e., information on a position and size) of the DL data burst 202 allocated to the remaining region excepting the A-MAP region 200 within the corresponding subframe. Similarly, the A-MAP IEs 212 and 214 transmitted every other subframe include allocation information of the DL data bursts 206 and 208 allocated to the remaining regions excepting the A-MAP region 204 within the corresponding two subframes. After MSs determine positions and sizes of data bursts allocated to the MSs, by receiving and decoding the A-MAP IEs 212 and 214 transmitted through the A-MAP region 200 or 204, the MSs are able to decode the data bursts of the determined sizes and positions. As will be discussed in more detail below, the subframes also may include a Mobile Traffic Indication (MOB_TRF-IND) message 216 and a Mobile Paging Advertisement (MOB_PAG-ADV) message 218.

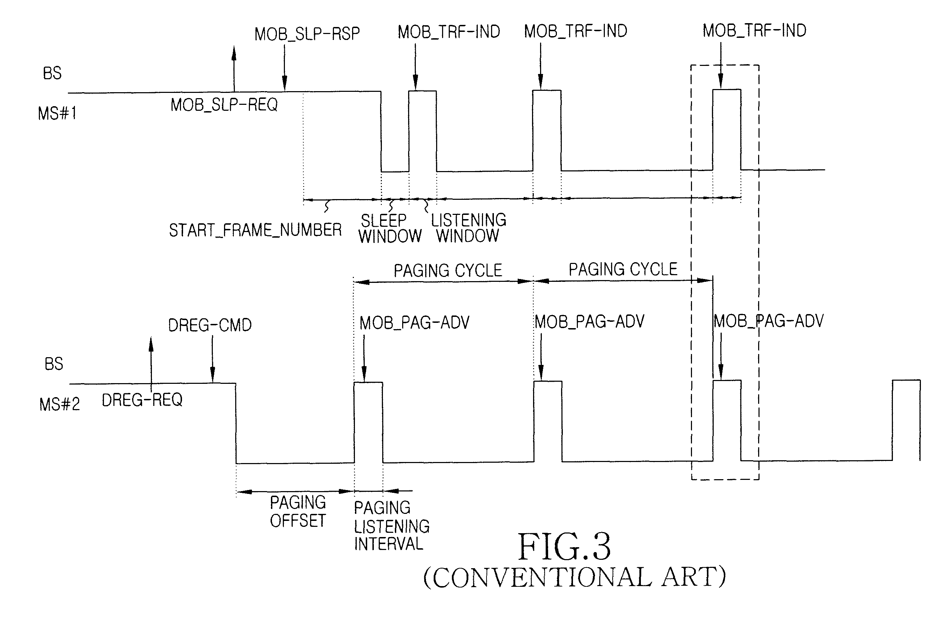

FIG. 3 is a diagram illustrating circumstances in which a listening window of an MS during a sleep mode and a paging listening interval of an MS during an idle mode intersect each other in a conventional IEEE 802.16m system.

In the conventional IEEE 802.16m communication system, a BS periodically broadcasts a broadcast management message to MSs within a service area. By receiving the broadcast management message, the MSs can obtain control information necessary for MS operation. Examples of a broadcast management message include an MOB_TRF-IND message, an MOB_PAG-ADV message, etc. A plurality of broadcast management messages can be broadcast simultaneously, and a plurality of broadcast management messages can be broadcast in the same subframe. However, the current standard does not define an A-MAP IE representing allocation information on a data burst for transmission of a broadcast management message. That is, a BS does not inform an MS of information on a position and size of a data burst for transmission of a broadcast management message through an A-MAP IE. However, the current standard defines that a data burst for transmission of a broadcast management message is positioned right after an A-MAP region. Thus, in a case in which a plurality of broadcast management messages are broadcast in the same subframe, an MS cannot be accurately aware of the type of the transmitted broadcast management message. Thus, the MS may acquire erroneous information and perform an erroneous operation. For one example, as in FIG. 2, an MOB_TRF-IND message 216 and an MOB_PAG-ADV message 218 can be broadcast in the same subframe. However, an MS receiving the subframe is not aware of the type of broadcast management messages based on the A-MAP IE.

The IEEE 802.16 communication system defines a sleep mode and an idle mode to minimize power consumption of an MS. In a case in which there is no transmission/reception of traffic during a predefined time (i.e., a sleep time), the MS can transition to the sleep mode. Also, in a case in which there is no transmission/reception of traffic during a predefined time (i.e., an idle time), the MS can transition to the idle mode.

From a system standpoint, there is a significant difference between the sleep mode and the idle mode as follows.

First, a BS controller maintains/manages all information (Connection ID (CID), scheduling information, etc.) on an MS during an awake mode and a sleep mode, while releasing all information (e.g., a Physical Cell ID (P-CID) and a Transport Connection ID (T-CID)) for communication between an MS and a system during an idle mode.

Second, upon movement between sectors or BSs, an MS in the sleep mode transitions to an awake mode and performs a HandOver (HO) procedure, while an MS in the idle mode performs a location update procedure without performing the HO procedure.

In order to request a state transition to a sleep mode, an MS sends a Mobile Sleep Request (MOB_SLP-REQ) message to a BS. In response, the BS sends a Mobile Sleep Response (MOB_SLP-RSP) message to the MS to permit the requested transition to the sleep mode. Thus, the MS state-transitions to the sleep mode at a time indicated by a start frame number (Start_Frame_Number), and performs the sleep mode during a sleep window. If transmission of packet data is required for the MS during the sleep mode, the BS must send the MS an MOB_TRF-IND message during a listening window of the MS and inform the MS that there is packet data to be transmitted. Also, the MS must awaken from the sleep mode during the listening window and receive the MOB_TRF-IND message from the BS, thus identifying if there is packet data to be received. If it is sensed that there is packet data to be received from the BS, the MS state-transitions to the awake mode and receives the packet data from the BS. On the other hand, if it is sensed that there is no packet data to be received, the MS returns to the sleep mode and maintains the sleep mode until a next listening window. On the contrary, if, during the sleep mode, the MS intends to transmit packet data to the BS, the MS can state-transition to the awake mode by sending a BandWidth (BW) request to the BS.

In order to request a state transition to an idle mode, an MS sends a De-Registration Request (DREG-REQ) message to a serving BS. In response, the serving BS sends a De-Registration Command (DREG-CMD) message to the MS, thus permitting the requested transition operation to the idle mode. Thus, the MS state-transitions to the idle mode and performs the idle mode. The DREG-CMD message includes a paging information Type/Length/Value (TLV) field. The paging information TLV field includes paging group identifier, paging cycle, and paging offset parameters. The paging group identifier parameter is an identifier for identifying a paging group. The paging group is constituted of a plurality of cells. The paging cycle parameter is a call cycle that is determined with reference to a paging cycle request that is requested by an MS. The paging offset parameter is used for determining a time at which an MS may be called using a frame number and the paging cycle parameter. The MS determines a paging listening interval using the paging cycle parameter and paging offset parameter and performs an operation of waiting for receipt of an MOB_PAG-ADV message during the paging listening interval. The MOB_PAG-ADV message includes information on whether the MS must maintain the idle mode state.

On the other hand, as an example of broadcasting a plurality of broadcast management messages in the same subframe, a case of broadcasting an MOB_TRF-IND message and an MOB_PAG-ADV message in the same subframe is described below. A listening window of an MS during a sleep mode and a paging listening interval of an MS during an idle mode can intersect with each other as illustrated in FIG. 3, and can be transmitted in the same subframe. Undoubtedly, it may be thought that the listening window and the paging listening interval can be transmitted in a different subframe, but the sleep mode and the idle mode can have a restriction condition in which an MS must awaken within a previously negotiated subframe. As a result, the MS being in the sleep mode and the MS being in the idle mode can awaken in the same subframe. In this case, in the conventional art, because an MS is not informed of allocation information on data bursts of an MOB_TRF-IND message and an MOB_PAG-ADV message through an A-MAP IE, the MS cannot be aware of which broadcast management message (i.e., MOB_TRF-IND message or MOB_PAG-ADV message) will be first transmitted. Thus, in a case in which the MOB_TRF-IND message is first transmitted, the MS in the idle mode, being ignorant of this fact, assumes that the MOB_PAG-ADV message is being transmitted and attempts to parse paging information, resultantly obtaining erroneous information. That is, despite the fact that a BS has not paged a corresponding MS, it can occur that the corresponding MS believes it has been paged. Alternatively, if the MOB_PAG-ADV message is first transmitted, a similar situation may occur for the MS in the sleep mode in which it obtains erroneous information. Therefore, an MS must be aware of which broadcast management message exists in a corresponding subframe and, if existing, must be aware of how large the message is in size. Accordingly, there is a need for a BS to transmit related information.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for supporting simultaneous transmission of a plurality of broadcast management messages, specifically, an MOB_TRF-IND message and an MOB_PAG-ADV message in a wireless communication system.

Another aspect of the present invention is to provide an apparatus and method for constructing, as a Broadcast A-MAP IE, a first Advanced-MAP Information Element (A-MAP IE) among a plurality of A-MAP IEs included in a 'User-specific' field, and indicating allocation information (i.e., information on a position and size) of a broadcast burst through the Broadcast A-MAP IE in a wireless communication system.

Yet another aspect of the present invention is to provide an apparatus and method for indicating a length of a corresponding broadcast management message through a Generic Media Access Control (MAC) Header (GMH) in a wireless communication system.

The above aspects are achieved by providing an apparatus and method for supporting simultaneous transmission of a plurality of broadcast management messages in a wireless communication system.

In accordance with an aspect of the present invention, a method in a Base Station (BS) for supporting transmission of a broadcast management message in a wireless communication system is provided. The method includes generating one or more broadcast management messages whose transmission is required, and constructing an A-MAP IE of a number, which is predefined on the basis of a predefined position within a subframe, as a Broadcast A-MAP IE. Here, the Broadcast A-MAP IE comprises allocation information of a broadcast burst for transmission of the generated one or more broadcast management messages.

In accordance with another aspect of the present invention, a method in a Mobile Station (MS) for receiving a broadcast management message in a wireless communication system is provided. The method includes detecting a Broadcast A-MAP IE by descrambling an A-MAP IE of the number, which is predefined on the basis of a predefined position within a subframe, using a predefined Broadcasting Station ID (STID), and, when the Broadcast A-MAP IE is successfully detected, extracting one or more broadcast management messages within the subframe on the basis of the detected Broadcast A-MAP IE. Here, the Broadcast A-MAP IE comprises allocation information of a broadcast burst for transmission of the one or more broadcast management messages.

In accordance with a further aspect of the present invention, an apparatus in a BS for supporting transmission of a broadcast management message in a wireless communication system is provided. The apparatus includes a broadcast management message generator for generating one or more broadcast management messages whose transmission is required, and an A-MAP message generator for constructing an A-MAP IE of a number, which is predefined on the basis of a predefined position within a subframe, as a Broadcast A-MAP IE. Here, the Broadcast A-MAP IE comprises allocation information of a broadcast burst for transmission of the generated one or more broadcast management messages.

In accordance with yet another aspect of the present invention, an apparatus in an MS for receiving a broadcast management message in a wireless communication system is provided. The apparatus includes an A-MAP message analyzer for detecting a Broadcast A-MAP IE by descrambling an A-MAP IE of the number, which is predefined on the basis of a predefined position within a subframe, using a predefined Broadcasting STID, and a broadcast management message processor for, when the Broadcast A-MAP IE is successfully detected, extracting one or more broadcast management messages within the subframe on the basis of the detected Broadcast A-MAP IE. Here, the Broadcast A-MAP IE comprises allocation information of a broadcast burst for transmission of the one or more broadcast management messages.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings in which:

FIG. 1 is a diagram illustrating a frame structure of a conventional Institute of Electrical and Electronics Engineers (IEEE) 802.16m system;

FIG. 2 is a diagram illustrating a frame structure of a conventional IEEE 802.16m system;

FIG. 3 is a diagram illustrating circumstances in which a listening window of a Mobile Station (MS) during a sleep mode and a paging listening interval of an MS during an idle mode intersect each other in a conventional IEEE 802.16m system;

FIG. 4 is a diagram illustrating a frame for supporting simultaneous transmission of a plurality of broadcast management messages in a wireless communication system according to an exemplary embodiment of the present invention;

FIG. 5 is a flowchart illustrating a method in which a Base Station (BS) simultaneously transmits a plurality of broadcast management messages in a wireless communication system according to an exemplary embodiment of the present invention;

FIG. 6 is a flowchart illustrating a method in which an MS receives a broadcast management message in a wireless communication system according to an exemplary embodiment of the present invention;

FIG. 7 is a diagram illustrating a frame for supporting simultaneous transmission of a plurality of broadcast management messages in a wireless communication system according to an exemplary embodiment of the present invention;

FIG. 8 is a diagram illustrating a frame for supporting simultaneous transmission of a plurality of broadcast management messages in a wireless communication system according to an exemplary embodiment of the present invention;

FIG. 9 is a flowchart illustrating a method in which a BS simultaneously transmits a plurality of broadcast management messages in a wireless communication system according to an exemplary embodiment of the present invention;

FIG. 10 is a flowchart illustrating a method in which an MS receives a broadcast management message in a wireless communication system according to an exemplary embodiment of the present invention;

FIG. 11 is a diagram illustrating a frame for supporting simultaneous transmission of a plurality of broadcast management messages in a wireless communication system according to an exemplary embodiment of the present invention;

FIG. 12 is a flowchart illustrating a method in which a BS simultaneously transmits a plurality of broadcast management messages in a wireless communication system according to an exemplary embodiment of the present invention;

FIG. 13 is a flowchart illustrating a method in which an MS receives a broadcast management message in a wireless communication system according to an exemplary embodiment of the present invention;

FIG. 14 is a diagram illustrating a frame for supporting simultaneous transmission of a plurality of broadcast management messages in a wireless communication system according to an exemplary embodiment of the present invention;

FIG. 15 is a diagram illustrating a frame for supporting simultaneous transmission of a plurality of broadcast management messages in a wireless communication system according to an exemplary embodiment of the present invention;

FIG. 16 is a diagram illustrating a frame for supporting simultaneous transmission of a plurality of broadcast management messages in a wireless communication system according to an exemplary embodiment of the present invention;

FIG. 17 is a diagram illustrating a frame for supporting simultaneous transmission of a plurality of broadcast management messages in a wireless communication system according to an exemplary embodiment of the present invention;

FIG. 18 is a block diagram illustrating a construction of a BS in a wireless communication system according to an exemplary embodiment of the present invention;

FIG. 19 is a block diagram illustrating a construction of an MS in a wireless communication system according to an exemplary embodiment of the present invention;

FIG. 20 is a diagram illustrating a frame for supporting simultaneous transmission of a plurality of broadcast management messages in a wireless communication system according to an exemplary embodiment of the present invention;

FIG. 21 is a diagram illustrating a frame for supporting simultaneous transmission of a plurality of broadcast management messages in a wireless communication system according to an exemplary embodiment of the present invention;

FIG. 22 is a diagram illustrating a frame for supporting simultaneous transmission of a plurality of broadcast management messages in a wireless communication system according to an exemplary embodiment of the present invention; and

FIG. 23 is a diagram illustrating a frame for supporting simultaneous transmission of a plurality of broadcast management messages in a wireless communication system according to an exemplary embodiment of the present invention.

Throughout the drawings, like reference numerals will be understood to refer to like parts, components and structures.

### DETAILED DESCRIPTION OF THE EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein may be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Exemplary methods of supporting simultaneous transmission of a plurality of broadcast management messages in a wireless communication system are described below. Here, the wireless communication system, for example, an Institute of Electrical and Electronics (IEEE) 802.16m system is described. However, it is to be understood that the present invention is applicable to any system having a Mobile Station (MS) that receives a broadcast management message.

Below, a broadcast management message (for example, a mobile traffic indication message and a mobile paging advertisement message) is described. However, the present invention is also applicable to any broadcast management messages not having an Advanced-MAP Information Element (A-MAP IE) representing allocation information on a corresponding data burst. Also, in the following description, it is exemplified that a data burst for transmission of a mobile paging advertisement message is positioned after a data burst for transmission of a mobile traffic indication message within a subframe. However, data bursts for transmission of the two messages within a subframe can be positioned opposite to each other. Also, in the following description, an MS in a sleep mode is referred to as a 'sleep mode MS', and an MS in an idle mode is referred to as an 'idle mode MS'.

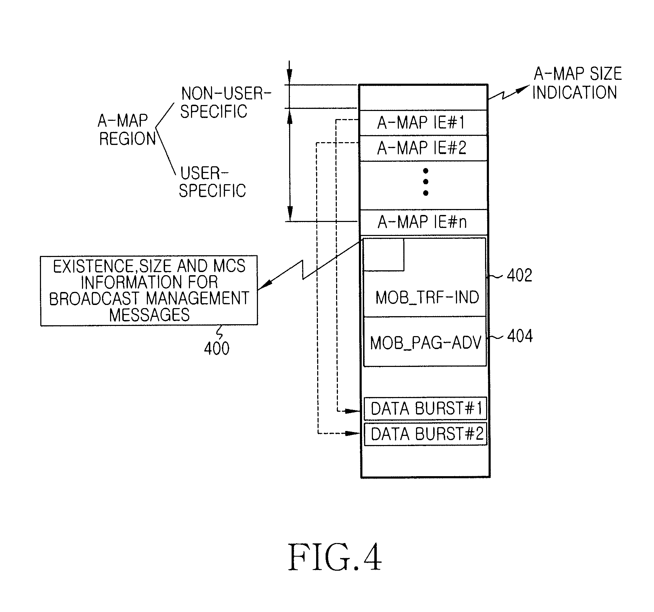

FIG. 4 is a diagram illustrating a frame for supporting simultaneous transmission of a plurality of broadcast management messages in a wireless communication system according to an exemplary embodiment of the present invention.

Referring to FIG. 4, a small data burst exists after an A-MAP region within a subframe. Through the small data burst, a Base Station (BS) transmits a broadcast management message defining message 400 for defining a plurality of broadcast management messages (e.g., a mobile traffic indication (MOB_TRF-IND) message 402 and a mobile paging advertisement (MOB_PAG-ADV) message 404) in a corresponding subframe. Thus, MSs in the sleep mode and idle mode must decode the small data burst in order to receive and decode the subframe.

In an exemplary implementation, the broadcast management message defining message 400 may be constructed in the format of Table 1 below.

**Table 1**

| Syntax | Size (bit) | Notes |
|---|---|---|
| Existence of MOB_TRF-IND | 1 | |
| Existence of MOB_PAG-ADV | 1 | |
| If(Existence of MOB_TRF-IND = =1) { | - | |
| Size of MOB_TRF-IND | 10 | |
| MCS information for MOB_TRF-IND | 6 | |
| } | - | |
| If(Existence of MOB_PAG-ADV = =1) { | - | |
| Size of MOB_PAG-ADV | 10 | |
| MCS information for MOB_PAG-ADV | 6 | |
| } | - | |
| Padding | Variable | If needed, for alignment to bytes boundary. |

Here, the 'Existence of MOB_TRF-IND' field represents the existence or non-existence of an MOB_TRF-IND message within a subframe. If the 'Existence of MOB_TRF-IND' field is set to '1', this means that the MOB_TRF-IND message is transmitted through a data burst existing right after the small data burst. The 'Size of MOB_TRF-IND' field represents the size of the MOB_TRF-IND message. The 'MCS information for MOB_TRF-IND' field represents a Modulation and Coding Scheme (MCS) level used for transmission of the MOB_TRF-IND message.

Likewise, the 'Existence of MOB_PAG-ADV' field represents the existence or non-existence of an MOB_PAG-ADV message within a subframe. If the 'Existence of MOB_PAG-ADV' field is set to '1', this means that the MOB_PAG-ADV message is transmitted through a data burst existing right after the small data burst (in case that the 'Existence of MOB_TRF-IND' field is set to '0') or a data burst existing right after a data burst for transmission of an MOB_TRF-IND message (in case that the 'Existence of MOB_TRF-IND' field is set to '1'). The 'Size of MOB_PAG-ADV' field represents the size of the MOB_PAG-ADV message. The 'MCS information for MOB_PAG-ADV' field represents an MCS level used for transmission of the MOB_PAG-ADV message.

In a case in which the MCS levels used for transmission of the MOB_TRF-IND message and MOB_PAG-ADV message are predefined as fixed values (mostly, the Robustest MCSs), the 'MCS information for MOB_TRF-IND' field and the 'MCS information for MOB_PAG-ADV' field can be omitted in Table 1 above. If so, the size of the small data burst necessary to transmit the MOB_TRF-IND message and MOB_PAG-ADV message will be reduced. Also, in Table 1 above, a bit allocated by each field can be varied in number according to realization. Thus, the small data burst necessary to transmit the MOB_TRF-IND message and MOB_PAG-ADV message can be naturally varied in size as well.

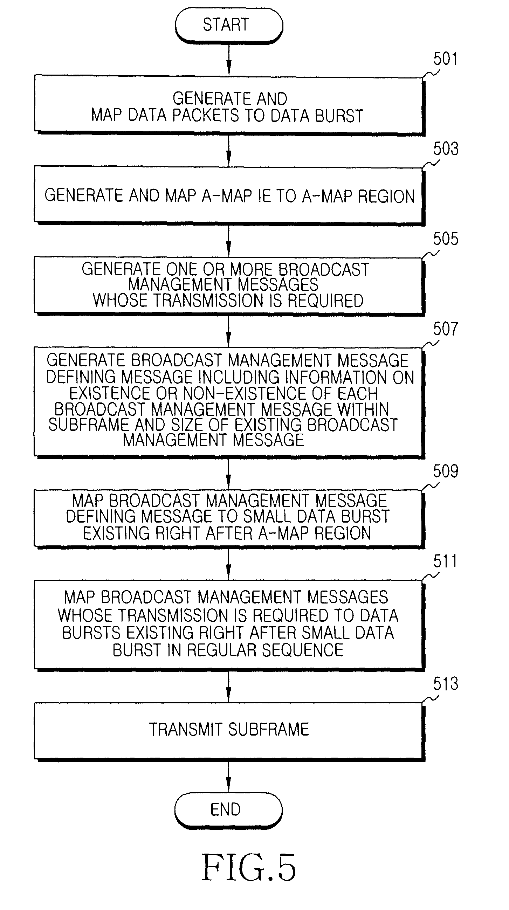

FIG. 5 is a flowchart illustrating a method in which a BS simultaneously transmits a plurality of broadcast management messages in a wireless communication system according to an exemplary embodiment of the present invention.

Referring to FIG. 5, in step 501, the BS generates data packets to transmit through a subframe, allocates a data burst for the generated data packets, and maps the generated data packets to the allocated data burst.

In step 503, the BS generates an A-MAP IE representing allocation information on the data burst for transmission of the data packets, and maps the generated A-MAP IE to an A-MAP region within a subframe.

In step 505, the BS generates one or more broadcast management messages whose transmission is required. The BS can determine a transmission time of a broadcast management message according to a transmission cycle by broadcast management message. Thus, the BS can determine if there is a broadcast management message whose transmission time is equal to a current subframe. When it is determined that there is a broadcast management message whose transmission time is equal to the current subframe, the BS determines if there is an MS requiring transmission of a corresponding broadcast management message. When it is determined that there is an MS requiring transmission of the corresponding broadcast management message, the BS can generate the corresponding broadcast management message. At this time, in case that transmission of a plurality of broadcast management messages is required, the BS can generate the plurality of broadcast management messages.

In step 507, the BS generates a broadcast management message defining message, which includes information on the existence or non-existence of each broadcast management message within a subframe and the size of an existing broadcast management message.

In step 509, the BS maps the generated broadcast management message defining message to a small data burst existing right after the A-MAP region.

In step 511, the BS maps the broadcast management messages whose transmission is required to data bursts existing right after the small data burst in regular sequence. For example, in a case in which transmission of an MOB_TRF-IND message and an MOB_PAG-ADV message is required, the BS can map the MOB_TRF-IND message to a data burst existing right after the small data burst and map the MOB_PAG-ADV message to a data burst existing right after the data burst, and vice versa. By this, the BS completes constructing the subframe.

In step 513, the BS transmits the subframe to an MS.

After that, the BS terminates the procedure according to the exemplary embodiment of the present invention.

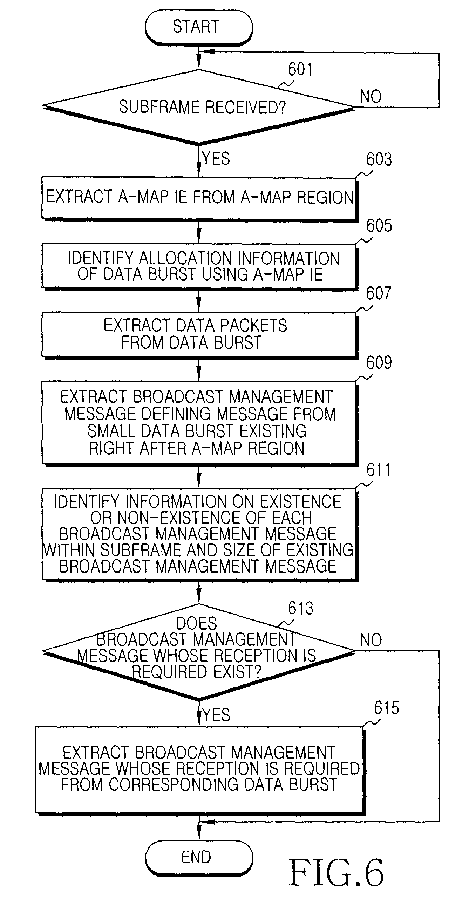

FIG. 6 is a flowchart illustrating a method in which an MS receives a broadcast management message in a wireless communication system according to an exemplary embodiment of the present invention.

Referring to FIG. 6, in step 601, the MS determines if a subframe is received from a BS.

When the subframe is received in step 601, the MS proceeds to step 603 and extracts an A-MAP IE from an A-MAP region within the subframe. In step 605, the MS identifies allocation information on a data burst of data packets transmitted to the MS using the extracted A-MAP IE.

In step 607, the MS extracts data packets from the data burst using the identified allocation information of the data burst.

In step 609, the MS extracts a broadcast management message defining message from a small data burst existing right after the A-MAP region within the subframe. In step 611, the MS identifies information related to a broadcast management message within the subframe using the extracted broadcast management message defining message. In more detail, the MS identifies information on the existence or non-existence of each broadcast management message within the subframe, and the size of an existing broadcast management message.

In step 613, the MS determines if there is a broadcast management message whose reception is required, using the identified information on the existence or non-existence of each broadcast management message within the subframe. For example, an MS in the sleep mode waits for receipt of an MOB_TRF-IND message. Accordingly, the MS in the sleep mode determines if the MOB_TRF-IND message exists within the subframe. Similarly, an MS in the idle mode waits for receipt of an MOB_PAG-ADV message. Accordingly, the MS in the idle mode determines if the MOB_PAG-ADV message exists within the subframe.

When it is determined that there is a broadcast management message whose reception is required in step 613, the MS proceeds to step 615 and extracts a corresponding broadcast management message from a data burst corresponding to the broadcast management message whose reception is required among data bursts existing right after the small data burst. For example, in a case in which an MOB_TRF-IND message exists in a data burst existing right after the small data burst within the subframe and an MOB_PAG-ADV message exists in a data burst existing right after the data burst that includes the MOB_TRF-IND message, a sleep mode MS can extract the MOB_TRF-IND message from the data burst existing right after the small data burst, and an idle mode MS can extract the MOB_PAG-ADV message from the data burst existing right after the data burst that includes the MOB_TRF-IND message.

After that, the MS terminates the procedure according to the exemplary embodiment of the present invention.

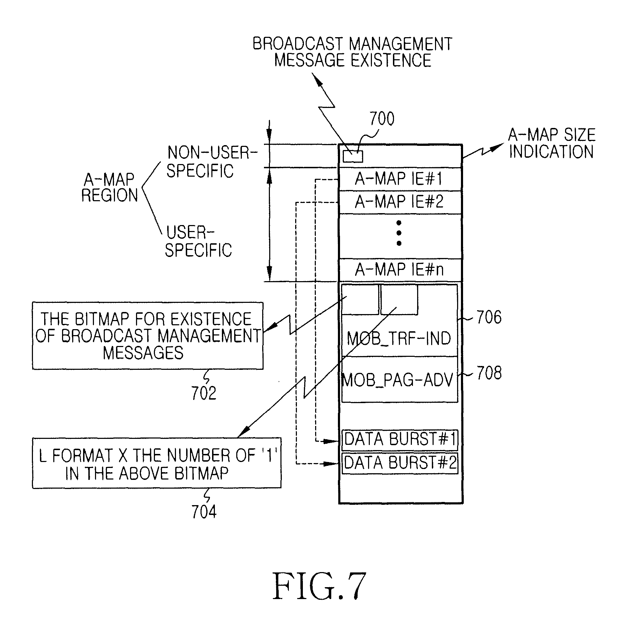

FIG. 7 is a diagram illustrating a frame for supporting simultaneous transmission of a plurality of broadcast management messages in a wireless communication system according to an exemplary embodiment of the present invention.

Referring to FIG. 7, a 'Non-user-specific' field within an A-MAP region of a subframe includes information (i.e., 1 bit) 700 representing the existence or non-existence of a broadcast management message within the subframe, together with information for indicating the size of the A-MAP region. In a case in which a broadcast management message within the subframe does not exist, the bit 700 is set to '0'. In this case, an MOB_TRF-IND message and an MOB_PAG-ADV message belonging to a broadcast management message category are not transmitted. Therefore, in the end, a small data burst does not exist just after the A-MAP region. Accordingly, a sleep mode MS and an idle mode MS do not need to decode the small data burst existing right after the A-MAP region. On the other hand, in a case in which the bit 700 is set to '1', this represents that a broadcast management message within the subframe exists. Thus, the sleep mode MS and the idle mode MS must decode the small data burst existing right after the A-MAP region.

In a case in which the bit 700 is set to '1', the small data burst exists right after the A-MAP region within the subframe. Through the small data burst, a first broadcast management message defining message 702 including a bitmap for the existence or non-existence of each broadcast management message within the subframe is transmitted.

Here, the first broadcast management message defining message 702 is constructed in the format of Table 2 below.

**Table 2**

| Syntax | Size (bit) | Notes |
|---|---|---|
| The bitmap for existence of Broadcast Management Messages | 16 | Each bit is assigned to a Broadcast Management Message |

Here, the 'The bitmap for existence of Broadcast Management Messages' field represents a bitmap for the existence or non-existence of each broadcast management message within a subframe. Each bit within the bitmap represents the existence or non-existence of a corresponding broadcast management message within the subframe. In case that the bitmap represents the existence or non-existence of each broadcast management message within the subframe as above, there is no need to specifically add a 'Type' field for denoting the type of broadcast management message because the bit itself can distinguish broadcast management messages. For example, in a case in which an MOB_TRF-IND message 706 is assigned a Most Significant Bit (MSB) 1^{st} bit and an MOB_PAG-ADV message 708 is assigned a 2^{nd} bit, if the MSB 1^{st} bit is set to '1', an MS can be aware that the MOB_TRF-IND message 706 within a subframe exists. Similarly, if the 2^{nd} bit is set to '1', the MS can be aware that the MOB_PAG-ADV message 708 within the subframe exists.

Through a data burst existing right after the small data burst, a second broadcast management message defining message 704 including length information of a broadcast management message corresponding to each bit set to '1' within the bitmap is transmitted.

Here, the second broadcast management message defining message 704 is constructed in an L format as illustrated in Table 3 below.

**Table 3**

| Syntax | Size (bit) | Notes |
|---|---|---|
| L format () { | | |
| For(i=0; i< The number of '1' in The bitmap for existence of Broadcast Management Messages; i++) { | | |
| Length | 12 | The length of each broadcast management message whose bit is set to '1' in the predefined fixed-sized data burst |
| } | | |
| } | | |

Here, in the 'The bitmap for existence of Broadcast Management Messages' field, the number of 'Length' fields is the same as the total number of bits set to '1'. In the 'The bitmap for existence of Broadcast Management Messages' field, each 'Length' field is the same as a sequence of the bits set to '1'. That is, the 'Length' field represents a length of a broadcast management message corresponding to a bit set to '1' within a bitmap. Through the first broadcast management message defining message 702 and second broadcast management message defining message 704, the MS can determine which and how many broadcast management messages exist within a subframe. By this, the MS can selectively perform decoding for respective broadcast management messages existing within the subframe. Although not illustrated in Table 3 above, a 'padding' field can be further included therein to add a spare bit.

Here, the first broadcast management message defining message 702 of Table 2 and the second broadcast management message defining message 704 of Table 3 can be also transmitted as one broadcast management message defining message without needing to separate for transmission as above. For example, in the case of FIG. 7, only a single data burst as opposed to two data bursts for transmission of the respective first broadcast management message defining message 702 and second broadcast management message defining message 704 is needed.

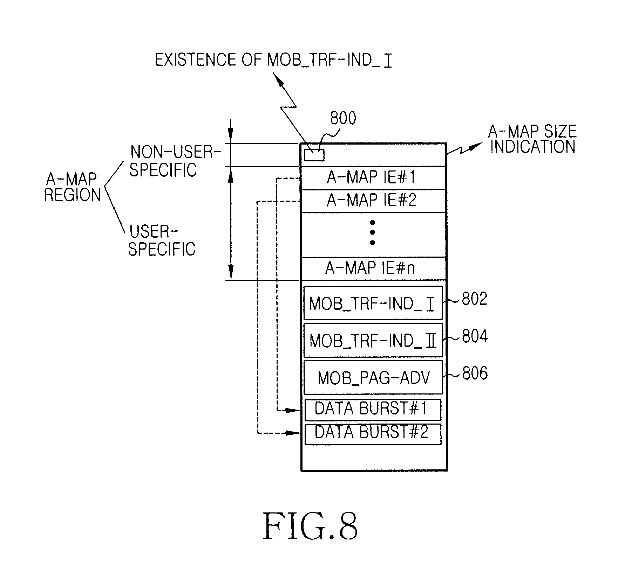

FIG. 8 is a diagram illustrating a frame for supporting simultaneous transmission of a plurality of broadcast management messages in a wireless communication system according to an exemplary embodiment of the present invention.

Referring to FIG. 8, an MOB_TRF-IND message may only include a first mobile traffic indication (MOB_TRF-IND_I) message 802. Alternatively, the MOB_TRF-IND message may include the MOB_TRF-IND_I message 802 and a second mobile traffic indication (MOB_TRF-IND_II) message 804. Furthermore, a new MOB_TRF-IND message of a different type can be defined as well. Here, the MOB_TRF-IND_I message 802 may include MOB_TRF-IND information on at least two MSs, and may also include information on the existence or non-existence and size of the MOB_TRF-IND_II message 804. In a case in which transmission of MOB_TRF-IND information on one or two MSs is required, it is enough to only transmit the MOB_TRF-IND_I message 802. However, in a case in which transmission of MOB_TRF-IND information on three or more MSs is required, transmission of the MOB_TRF-IND_II message 804 including MOB_TRF-IND information on an additional MS is also needed. Thus, in a case in which the transmission of the MOB_TRF-IND information on three or more MSs is required, the MOB_TRF-IND_I message 802 must be set to include information on the existence or non-existence and size of the MOB_TRF-IND_II message 804 such that an MS in the sleep mode can receive the MOB_TRF-IND_II message 804 together with the MOB_TRF-IND_I message 802.

A 'Non-user-specific' field within an A-MAP region of a subframe includes information (i.e., 1 bit) 800 representing the existence or non-existence of the MOB_TRF-IND_I message 802 within the subframe, together with information indicating the size of the A-MAP region. A data burst existing right after the A-MAP region transmits the MOB_TRF-IND_I message 802.

Through the bit 800, a sleep mode MS can determine the existence or non-existence of the MOB_TRF-IND_I message 802 within the subframe. In a case in which the MOB_TRF-IND_I message 802 within the subframe does not exist, the bit 800 is set to '0'. This means that the sleep mode MS does not need to decode a data burst existing right after an A-MAP region. On the other hand, in a case in which the bit 800 is set to '1', this represents that the MOB_TRF-IND_I message 802 within the subframe does exist. Thus, the sleep mode MS must decode the data burst existing right after the A-MAP region. In an exemplary implementation, if it is predetermined that the sleep mode MS will receive an MOB_TRF-IND_I message 802 in a corresponding subframe, without needing to decode the bit 800, the sleep mode MS can decode a data burst existing right after an A-MAP region to acquire the MOB_TRF-IND_I message 802.

An idle mode MS must decode the bit 800 without fail. If the bit 800 is set to '1', the idle mode MS determines the existence of an MOB_TRF-IND_I message 802 within a subframe, and must decode a data burst existing right after an A-MAP region to acquire the MOB_TRF-IND_I message 802. The idle mode MS can determine a position where transmission of the MOB_TRF-IND messages 802 and 804 is finished, with reference to information on the existence or non-existence and size of the MOB_TRF-IND_II message 804 included in the MOB_TRF-IND_I message 802. Accordingly, the idle mode MS can determine a position of a start of transmission of an MOB_PAG-ADV message 806. Therefore, the idle mode MS can decode a data burst of a corresponding position to acquire the MOB_PAG-ADV message 806.

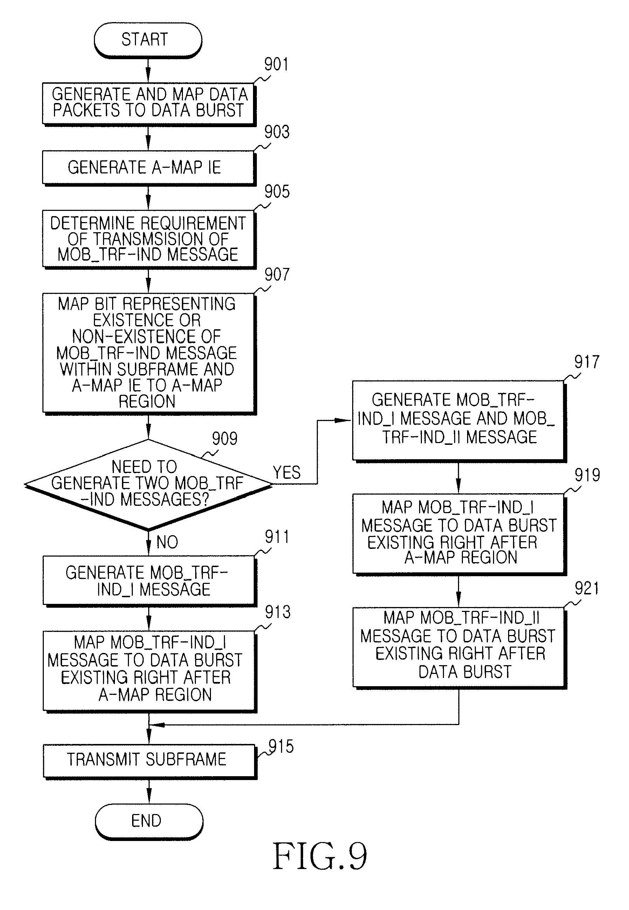

FIG. 9 is a flowchart illustrating a method in which a BS simultaneously transmits a plurality of broadcast management messages in a wireless communication system according to an exemplary embodiment of the present invention.

Referring to FIG. 9, in step 901, the BS generates data packets to transmit through a subframe, allocates a data burst for the generated data packets, and maps the generated data packets to the allocated data burst.

In step 903, the BS generates an A-MAP IE representing allocation information on the data burst for transmission of the data packets.

In step 905, the BS determines if transmission of an MOB_TRF-IND message is required. The BS can determine a transmission time of the MOB_TRF-IND message according to a transmission cycle and thus determine if a current subframe is equal to the transmission time of the MOB_TRF-IND message. When it is determined that the current subframe is equal to the transmission time of the MOB_TRF-FND message, the BS determines if a sleep mode MS exists. In a case in which it is determined that the sleep mode MS exists, the BS can determine that the transmission of the MOB_TRF-IND message is required.

In a case in which it is determined that the transmission of the MOB_TRF-IND message is required according to the result of the determination as to whether the transmission of the MOB_TRF-IND message is required, in step 907, the BS maps a bit, which represents the existence or non-existence of the MOB_TRF-IND message within a subframe, and the A-MAP IE to an A-MAP region.

In step 909, the BS determines if there is a need to generate two MOB_TRF-IND messages. That is, the BS determines if there is a need to generate an MOB_TRF-IND_I message and an MOB_TRF-IND_II message. The MOB_TRF-IND_I message can include MOB_TRF-IND information on at least two MSs. Thus, in a case in which transmission of MOB_TRF-IND information on one or two MSs is required, it is enough to only transmit the MOB_TRF-IND_I message. However, in a case in which transmission of MOB_TRF-IND information on three or more MSs is required, transmission of the MOB_TRF-IND_II message including MOB_TRF-IND information on an additional MS is needed. For this purpose, the MOB_TRF-IND_I message can further include information on the existence or non-existence and size of the MOB_TRF-IND_II message.

When it is determined that there is no need to generate the two MOB_TRF-IND messages in step 909, the BS proceeds to step 911 and generates only the MOB_TRF-IND_I message. In step 913, the BS maps the generated MOB_TRF-IND_I message to a data burst existing right after the A-MAP region. By this, the BS completes constructing the subframe and, in step 915, the BS transmits the subframe to an MS.

On the other hand, when it is determined that there is a need to generate the two MOB_TRF-IND messages in step 909, the BS proceeds to step 917 and generates the MOB_TRF-IND_I message and the MOB_TRF-IND_II message. In step 919, the BS maps the MOB_TRF-IND_I message to a data burst existing right after the A-MAP region and, in step 921, the BS maps the MOB_TRF-IND_II message to a data burst existing right after the data burst that includes the MOB_TRF-IND_I message. By this, the BS completes constructing the subframe and, in step 915, the BS transmits the subframe to an MS.

Although not illustrated, in a case in which transmission of an MOB_PAG-ADV message is required, the BS can map the MOB_PAG-ADV message to the data burst existing right after the A-MAP region (in case that the MOB_TRF-IND_I message is not transmitted), a data burst existing right after a data burst through which the MOB_TRF-IND_I message is transmitted (in case that the MOB_TRF-IND_II message is not transmitted), or a data burst existing right after a data burst through which the MOB_TRF-IND_II message is transmitted (in case that the MOB_TRF-IND_II message is transmitted) to complete constructing the subframe.

After that, the BS terminates the procedure according to the exemplary embodiment of the present invention.

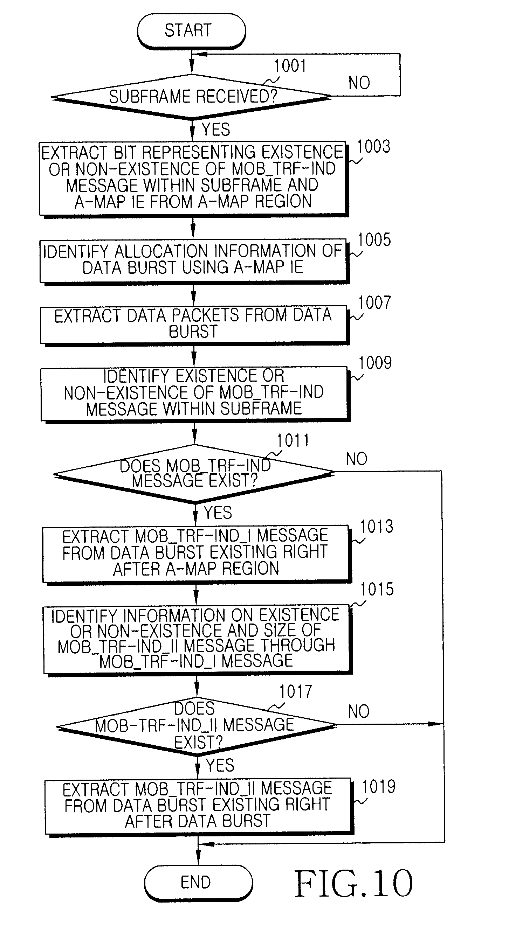

FIG. 10 is a flowchart illustrating a method in which an MS receives a broadcast management message in a wireless communication system according to an exemplary embodiment of the present invention. Here, the MS means a sleep mode MS.

Referring to FIG. 10, in step 1001, the MS determines if a subframe is received from a BS.

When it is determined that the subframe is received in step 1001, the MS proceeds to step 1003 and extracts a bit, which represents the existence or non-existence of an MOB_TRF-IND message within the subframe, and an A-MAP IE from an A-MAP region.

In step 1005, the MS identifies allocation information on a data burst of data packets transmitted to the MS using the extracted A-MAP IE. In step 1007, the MS extracts its own data packets from the data burst using the identified allocation information of the data burst.

In step 1009, the MS identifies the existence or non-existence of the MOB_TRF-IND message within the subframe using the extracted bit representing the existence or non-existence of the MOB_TRF-IND message within the subframe.

In step 1011, the MS determines if the MOB_TRF-IND message exists within the subframe, through the identification.

When it is determined that the MOB_TRF-IND message does not exist within the subframe through the identification in step 1011, the MS terminates the procedure according to the exemplary embodiment of the present invention.

On the other hand, when it is determined that the MOB_TRF-IND message exists within the subframe through the identification in step 1011, the MS proceeds to step 1013 and extracts an MOB_TRF-IND_I message from a data burst existing right after the A-MAP region.

In step 1015, the MS identifies information on the existence or non-existence and size of an MOB_TRF-IND_II message, through the extracted MOB_TRF-IND_I message. In step 1017, the MS determines if the MOB_TRF-IND_II message exists through the identification.

When it is determined that the MOB_TRF-IND_II message does not exist through the identification in step 1017, the MS terminates the procedure according to the exemplary embodiment of the present invention.

On the other hand, when it is determined that the MOB_TRF-IND_II message exists through the identification in step 1017, the MS proceeds to step 1019 and extracts the MOB_TRF-IND_II message from a data burst existing right after the data burst for transmission of the MOB_TRF-IND_I message.

After that, the MS terminates the procedure according to the exemplary embodiment of the present invention.

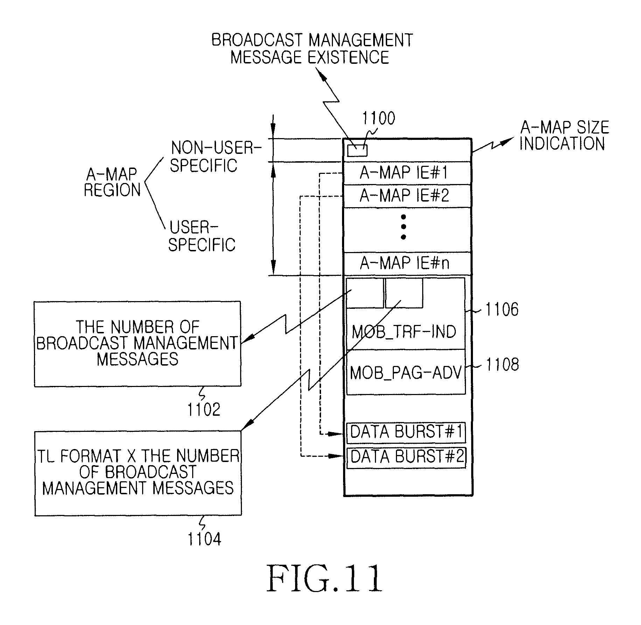

FIG. 11 is a diagram illustrating a frame for supporting simultaneous transmission of a plurality of broadcast management messages in a wireless communication system according to an exemplary embodiment of the present invention.

Referring to FIG. 11, a 'Non-user-specific' field within an A-MAP region of a subframe includes information (i.e., 1 bit) 1100 representing the existence or non-existence of a broadcast management message within the subframe, together with information for indicating the size of the A-MAP region. Here, the bit 1100 is the same as the bit 700 of FIG. 7 and thus, a detailed description of the bit 1100 is omitted below.

A small data burst exists right after the A-MAP region within the subframe. In a case in which the bit 1100 is set to '1', a first broadcast management message defining message 1102 for defining the number of broadcast management messages existing within the subframe is transmitted through the small data burst.

Here, the first broadcast management message defining message 1102 is constructed in the format of Table 4 below.

**Table 4**

| Syntax | Size (bit) | Notes |
|---|---|---|
| The number of Broadcast Management Messages | 4 | The number of broadcast management messages which are transmitted in the same subframe |

Here, the 'The number of Broadcast Management Messages' field represents the number of broadcast management messages existing within a subframe.

A second broadcast management message defining message 1104 for defining broadcast management messages 1106 and 1108 existing within the subframe is transmitted through a data burst existing right after the small data burst.

Here, the second broadcast management message defining message 1104 is constructed in a TL format of Table 5 below.

**Table 5**

| Syntax | Size (bit) | Notes |
|---|---|---|
| TL format () { | | |
| For(i=0; i< The number of Broadcast Management Messages; i++) { | | |
| | | 0b0000 : MOB_TRF-IND |
| Type | 4 | 0b0001: MOB_PAG-ADV |
| | | 0b0010 ∼ 0b1111 : Reserved |
| Length | 12 | The length of broadcast management message specified by Type field |
| } | | |
| } | | |

Here, the 'Type' field represents the type of the broadcast management message and the 'Length' field represents the size of the broadcast management message. The size of the 'Type' field and 'Length' field is the same as the number of broadcast management messages existing within the subframe, shown in the 'The number of Broadcast Management Messages' field within the first broadcast management message defining message 1102. Thus, through the 'The number of Broadcast Management Messages × 16 bits (i.e., Type and Length)', an MS can be aware of the size of a data burst for transmission of the second broadcast management message defining message 1104. Also, through the first broadcast management message defining message 1102 and the second broadcast management message defining message 1104, the MS can determine which and how many broadcast management messages exist within the subframe. Accordingly, the MS can selectively perform decoding for respective broadcast management messages existing within the subframe.

In an exemplary implementation, the number of broadcast management messages transmissible through one subframe is equal to about '4'. Thus, a method of transmitting a broadcast management message defining message as one broadcast management message defining message without needing to separate the broadcast management message defining message into a first broadcast management message defining message and a second broadcast management message defining message for transmission is also possible as in Table 6 below.

**Table 6**

| Syntax | Size (bit) | Notes |
|---|---|---|
| The number of Broadcast Management Messages | 4 | The number of broadcast management messages which are transmitted in the same subframe |
| For(i=0; i< The number of Broadcast Management Messages; i++) { | | |
| | | 0b0000 : MOB_TRF-IND |
| Type | 4 | 0b0001: MOB_PAG-ADV |
| | | 0b0010 ∼ 0b1111 : Reserved |
| Length | 12 | The length of broadcast management message specified by Type field |
| } | | |
| Padding | Variable | If needed, for alignment to bytes boundary. |

Here, in a case in which a broadcast management message defining message is transmitted as one broadcast management message defining message as in Table 6 above, in FIG. 11, only one as opposed to two data bursts for transmission of each of a first broadcast management message defining message 1102 and a second broadcast management message defining message 1104 is needed.

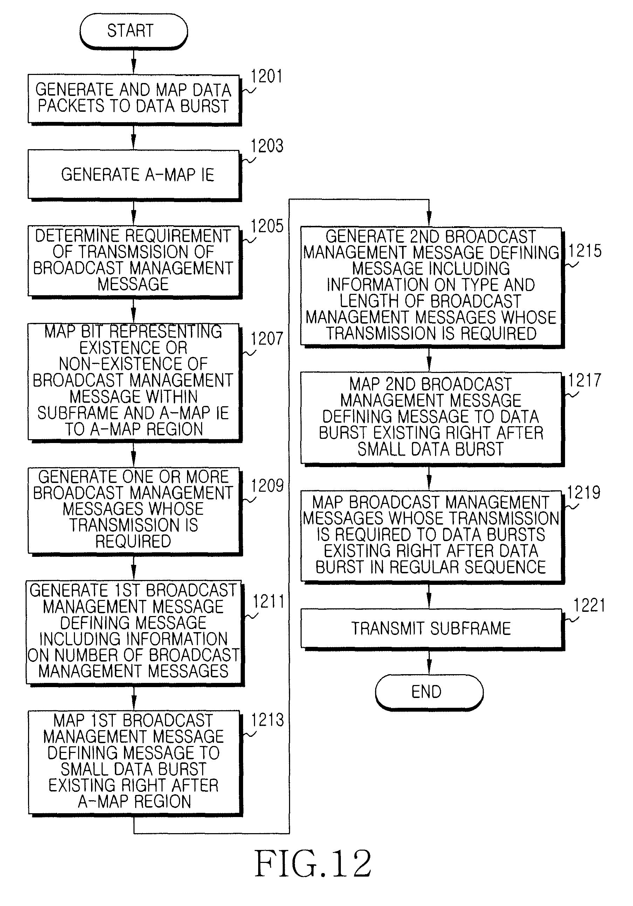

FIG. 12 is a flowchart illustrating a method in which a BS simultaneously transmits a plurality of broadcast management messages in a wireless communication system according to an exemplary embodiment of the present invention.

Referring to FIG. 12, in step 1201, the BS generates data packets to transmit through a subframe, allocates a data burst for the generated data packets, and maps the generated data packets to the allocated data burst.

In step 1203, the BS generates an A-MAP IE representing allocation information on the data burst of the data packets.

In step 1205, the BS determines if transmission of a broadcast management message is required. The BS can determine a transmission time of the broadcast management message according to a transmission cycle by broadcast management message and thus, the BS can determine the existence or non-existence of a broadcast management message whose transmission time is equal to a current subframe. When determining the existence of the broadcast management message whose transmission time is equal to the current subframe, the BS determines the existence or non-existence of an MS needing transmission of a corresponding broadcast management message. When determining the existence of the MS needing the transmission of the corresponding broadcast management message, the BS can determine that the transmission of the corresponding broadcast management message is required. At this time, transmission of a plurality of broadcast management messages can be required.

In a case in which it is determined that the transmission of the broadcast management message is required according to the result of the determination as to whether the transmission of the broadcast management message is required, in step 1207, the BS maps a bit, which represents the existence or non-existence of the broadcast management message within the subframe, and the A-MAP IE to an A-MAP region.

In step 1209, the BS generates one or more broadcast management messages whose transmission is required.

In step 1211, the BS generates a first broadcast management message defining message including information on the number of the generated broadcast management messages. In step 1213, the BS maps the generated first broadcast management message defining message to a small data burst existing right after the A-MAP region.

In step 1215, the BS generates a second broadcast management message defining message including information on the type and length of broadcast management messages whose transmission is required. In step 1217, the BS maps the generated second broadcast management message defining message to the data burst existing right after the small data burst.

In step 1219, the BS maps the broadcast management messages whose transmission is required to data bursts existing right after the data burst, in regular sequence. By this, the BS completes constructing the subframe and, in step 1221, the BS transmits the subframe to an MS.

After that, the BS terminates the procedure according to the exemplary embodiment of the present invention.

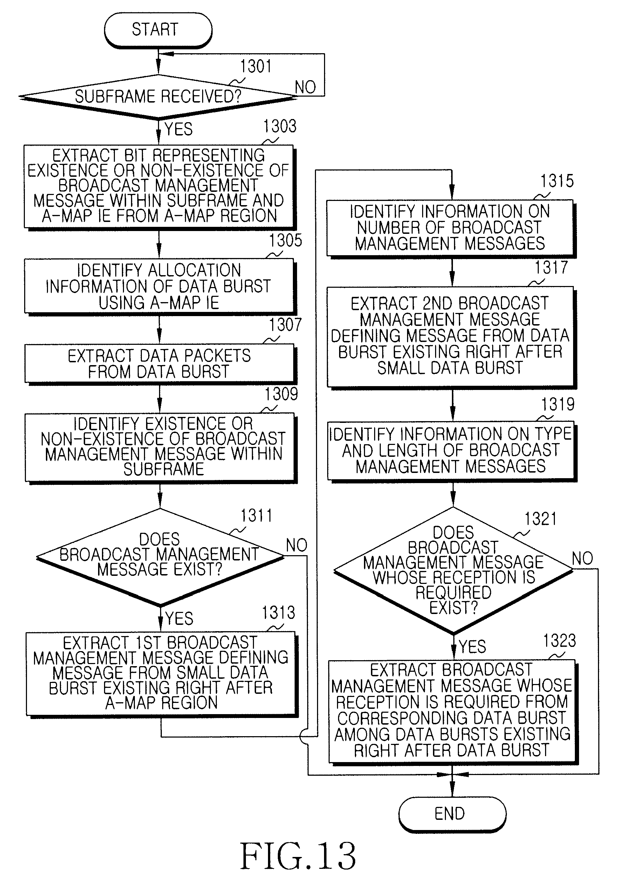

FIG. 13 is a flowchart illustrating a method in which an MS receives a broadcast management message in a wireless communication system according to an exemplary embodiment of the present invention.

Referring to FIG. 13, in step 1301, the MS determines if a subframe is received from a BS.

When it is determined in step 1301 that the subframe is received, the MS proceeds to step 1303 and extracts a bit that represents the existence or non-existence of a broadcast management message within the subframe, and an A-MAP IE from an A-MAP region.

In step 1305, the MS identifies allocation information on a data burst of data packets transmitted to the MS, using the extracted A-MAP IE. In step 1307, the MS extracts its own data packets from the data burst using the identified allocation information of the data burst.

In step 1309, the MS identifies the existence or non-existence of the broadcast management message within the subframe using the extracted bit representing the existence or non-existence of the broadcast management message within the subframe.

In step 1311, the MS determines if the broadcast management message exists within the subframe, through the identification.

When it is determined that the broadcast management message does not exist within the subframe through the identification in step 1311, the MS terminates the procedure according to the exemplary embodiment of the present invention.

On the other hand, when it is determined that the broadcast management message exists within the subframe through the identification in step 1311, the MS proceeds to step 1313 and extracts a first broadcast management message defining message from a small data burst existing right after the A-MAP region. In step 1315, the MS identifies information on the number of broadcast management messages within the subframe, through the extracted first broadcast management message defining message.

In step 1317, the MS extracts a second broadcast management message defining message from a data burst existing right after the small data burst. In step 1319, the MS identifies information on the type and length of the broadcast management messages within the subframe through the extracted second broadcast management message defining message.

In step 1321, the MS determines the existence or non-existence of a broadcast management message whose reception is required within the subframe, using the information on the number of the broadcast management messages within the subframe and the type information and length information on the respective broadcast management messages.

When it is determined that the broadcast management message whose reception is required does not exist within the subframe in step 1321, the MS terminates the procedure according to the exemplary embodiment of the present invention.

On the other hand, when it is determined that the broadcast management message whose reception is required exists within the subframe in step 1321, the MS proceeds to step 1323 and extracts the broadcast management message whose reception is required, from a corresponding data burst among data bursts existing right after the data burst including the second broadcast management message defining message.

After that, the MS terminates the procedure according to the exemplary embodiment of the present invention.

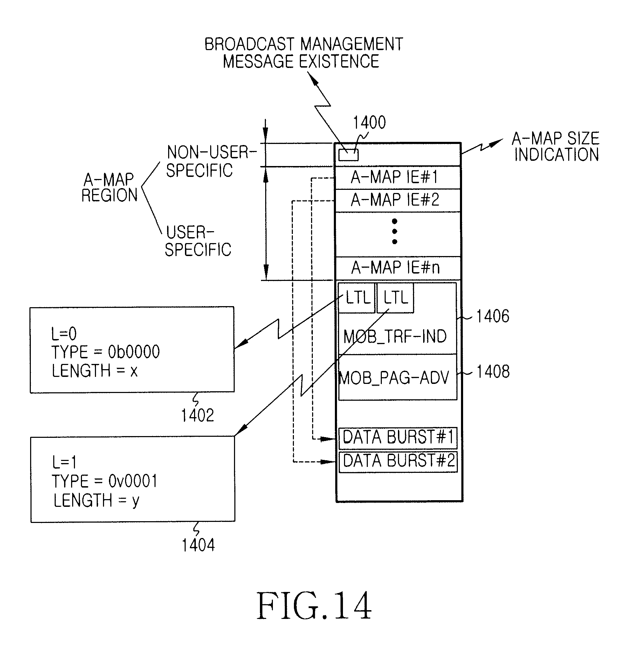

FIG. 14 is a diagram illustrating a frame for supporting simultaneous transmission of a plurality of broadcast management messages in a wireless communication system according to an exemplary embodiment of the present invention.

Referring to FIG. 14, a 'Non-user-specific' field within an A-MAP region of a subframe includes information (i.e., 1 bit) 1400 representing the existence or non-existence of a broadcast management message within the subframe, together with information for indicating the size of the A-MAP region. Here, the bit 1400 is the same as the bit 700 of FIG. 7 and thus, a detailed description of the bit 1400 is omitted below.

In a case in which the bit 1400 is set to '1', a small data burst exists right after the A-MAP region within the subframe. Through the small data burst, a broadcast management message defining message for defining the broadcast management message existing within the subframe is transmitted. In a case in which a plurality of broadcast management messages (i.e., an MOB_TRF-IND message 1406 and an MOB_PAG-ADV message 1408) within the subframe exists, each corresponding broadcast management message defining messages 1402 and 1404 exist in the plurality as well. Each of the plurality of broadcast management message defining message 1402 and 1404 is mapped to a plurality of continuous small data bursts and is transmitted to an MS.

Here, each of the plurality of broadcast management message defining messages 1402 and 1404 are constructed in an LTL format of Table 7 below.

**Table 7**

| Syntax | Size (bit) | Notes |
|---|---|---|
| LTL format () { | | |
| Last Broadcast Management Message | 1 | 0 : There is one more LTL format right after this LTL format |
| | | 1 : There is no LTL format after this LTL format (i.e. this LTL is last LTL) |
| | | 0b0000 : MOB_TRF-IND |
| Type | 4 | 0b0001: MOB_PAG-ADV |
| | | 0b0010 ∼ 0b1111 : Reserved |
| Length | 11 | The length of broadcast management message specified by Type field |
| } | | |

Here, the 'Last Broadcast Management Message' field within the LTL format represents whether a corresponding LTL format is the last. For example, in a case in which two broadcast management messages are continuously transmitted, two LTL formats each corresponding to the two broadcast management messages are continuously transmitted. At this time, a 'Last Broadcast Management Message' field within a first LTL format can be set to '0' to represent that a different LTL format exists, and a 'Last Broadcast Management Message' field within a second LTL format can be set to '1' to represent that a different LTL format no longer exists. Thus, the MS decodes the small data burst right after the A-MAP region to acquire the first LTL format. At this time, the 'Last Broadcast Management Message' field within the acquired first LTL format is set to '0' and thus, the MS decodes a next small data burst which is expected to include a different LTL format. Accordingly, the MS acquires the second LTL format. At this time, the 'Last Broadcast Management Message' field of the acquired second LTL format is set to '1' and thus, the MS determines that a different LTL format no longer exists and a broadcast management message corresponding to the first LTL format exists. The 'Type' field within the LTL format represents the type of a corresponding broadcast management message, and the 'Length' field within the LTL format represents the size of a corresponding broadcast management message. Through a data burst existing right after a data burst including the second LTL format, a broadcast management message (e.g., an MOB_TRF-IND message) corresponding to the first LTL format is transmitted. After that, through a data burst existing right after the data burst, a broadcasting management message (e.g., an MOB_PAG-ADV message) corresponding to the second LTL format is transmitted.

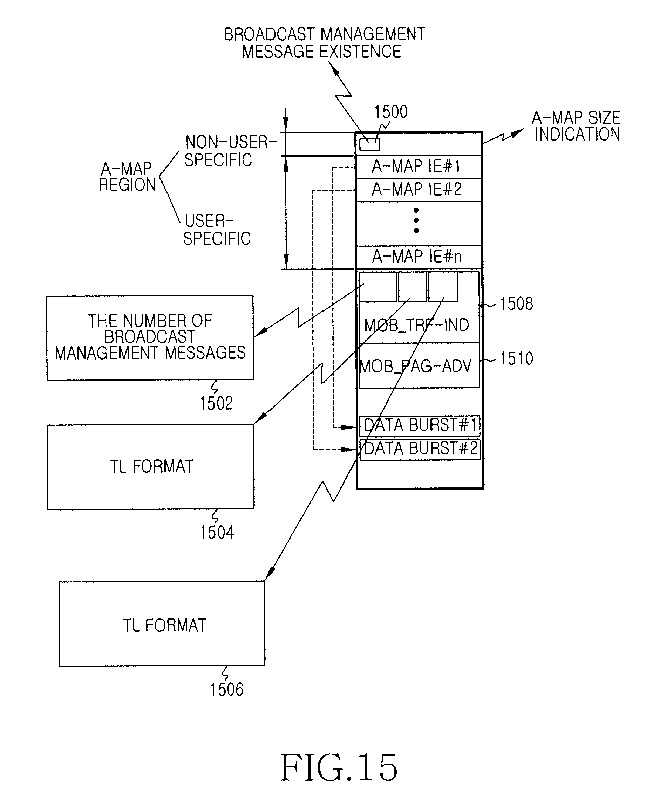

FIG. 15 is a diagram illustrating a frame for supporting simultaneous transmission of a plurality of broadcast management messages in a wireless communication system according to an exemplary embodiment of the present invention.

Referring to FIG. 15, a 'Non-user-specific' field within an A-MAP region of a subframe includes information (i.e., 1 bit) 1500 representing the existence or non-existence of a broadcast management message within the subframe, together with information for indicating the size of the A-MAP region. Here, the bit 1500 is the same as the bit 700 of FIG. 7 and thus, a detailed description of the bit 1500 is omitted below.

A small data burst exists right after the A-MAP region within the subframe. In a case in which the bit 1500 is set to '1', a first broadcast management message defining message 1502 for defining the number of broadcast management messages existing within the subframe is transmitted through the small data burst.

Here, the first broadcast management message defining message 1502 is constructed in the format of Table 8 below.

**Table 8**

| Syntax | Size (bit) | Notes |
|---|---|---|
| The number of Broadcast Management Messages | 4 | The number of Broadcast Management Messages in the subframe |

Here, the 'The number of Broadcast Management Messages' field represents the number of broadcast management messages existing within the subframe.

Right after the small data burst for transmission of the first broadcast management message defining message 1502, as many continuous small data bursts exist as the number of broadcast management messages existing within the subframe, shown in the 'The number of Broadcast Management Messages' field. Through the respective small data bursts, second broadcast management message defining messages 1504 and 1506 for defining respective broadcast management messages 1508 and 1510 existing within the subframe are transmitted.

In an exemplary implementation, the second broadcast management message defining messages 1504 and 1506 are each constructed in a TL format of Table 9 below.

**Table 9**

| Syntax | Size (bit) | Notes |
|---|---|---|
| TL format () { | | |
| | | 0b0000 : MOB_TRF-IND |
| Type | 4 | 0b0001: MOB_PAG-ADV |
| | | 0b0010 ∼ 0b1111 : Reserved |
| Length | 11 | The length of broadcast management message specified by Type field |
| } | | |

Here, the 'Type' field within the TL format represents the type of a corresponding broadcast management message, and the 'Length' field within the TL format represents the size of a corresponding broadcast management message. Through the first broadcast management message defining message 1502 and the second broadcast management message defining messages 1504 and 1506, an MS can determine which and how many broadcast management messages exist within the subframe. Accordingly, the MS can selectively perform decoding for the respective broadcast management messages existing within the subframe.

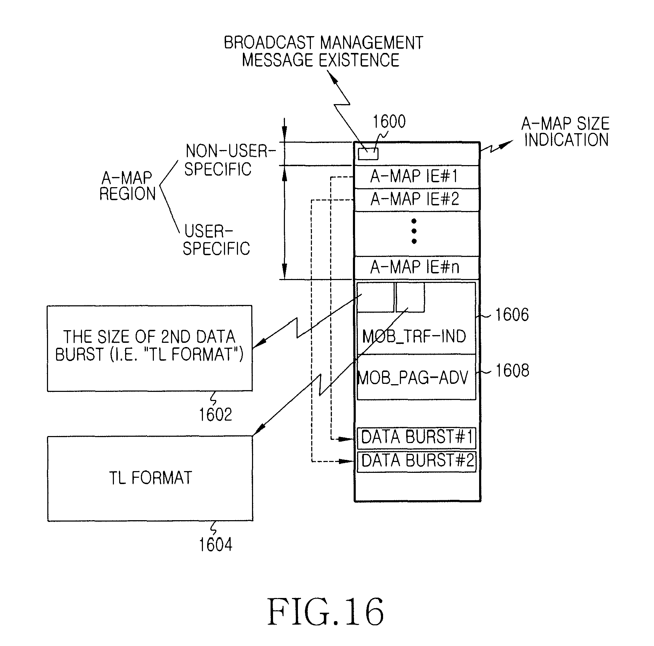

FIG. 16 is a diagram illustrating a frame for supporting simultaneous transmission of a plurality of broadcast management messages in a wireless communication system according to an exemplary embodiment of the present invention.

Referring to FIG. 16, a 'Non-user-specific' field within an A-MAP region of a subframe includes information (i.e., 1 bit) 1600 representing the existence or non-existence of a broadcast management message within the subframe, together with information for indicating the size of the A-MAP region. Here, the bit 1600 is the same as the bit 700 of FIG. 7 and thus, a detailed description of the bit 1600 is omitted below.

A small data burst exists right after the A-MAP region within the subframe. In a case in which the bit 1600 is set to '1', through the small data burst, a first broadcast management message defining message 1602 for defining the size of a data burst existing right after the small data burst is transmitted.

In an exemplary implementation, the first broadcast management message defining message 1602 is constructed in the format of Table 10 below.

**Table 10**

| Syntax | Size (bit) | Notes |
|---|---|---|
| The size of 2nd data burst | 8 | The size of data burst (i.e., following this predefined fixed-sized data burst) which contains Type & Length format |

Here, the 'The size of 2nd data burst' field represents the size of the data burst existing right after the small data burst. Here, the data burst existing right after the small data burst has a variable size. Through the small data burst of the variable size, a second broadcast management message defining message 1604 for defining broadcast management messages (i.e., an MOB_TRF-IND message 1606 and an MOB_PAG-ADV message 1608) existing within the subframe is transmitted.

In an exemplary implementation, the second broadcast management message defining message 1604 is constructed in a TL format of Table 11 below.

**Table 11**

| Syntax | Size (bit) | Notes |
|---|---|---|
| TL format () { | | |
| The number of Broadcast Management Messages | 1 | |
| For(i=0; i< The number of Broadcast Management Messages; i++) { | | |
| | | 0b0000 : MOB_TRF-IND |
| Type | 4 | 0b0001: MOB_PAG-ADV |
| | | 0b0010 ∼ 0b1111 : Reserved |
| Length | 12 | The length of broadcast management message specified by Type field |
| } | | |
| } | | |

Here, the 'The number of Broadcast Management Messages' field represents the number of broadcast management messages existing within the subframe. The 'Type' field represents the type of a broadcast management message, and the 'Length' field represents the size of a broadcast management message. Here, the number of the 'Type' field and 'Length' field is the same as the number of broadcast management messages existing within the subframe, shown in the 'The number of Broadcast Management Messages' field. Through the first broadcast management message defining message 1602 and the second broadcast management message defining message 1604, an MS can determine which and how many broadcast management messages exist within the subframe. By this, the MS can selectively perform decoding for the respective broadcast management messages existing within the subframe.

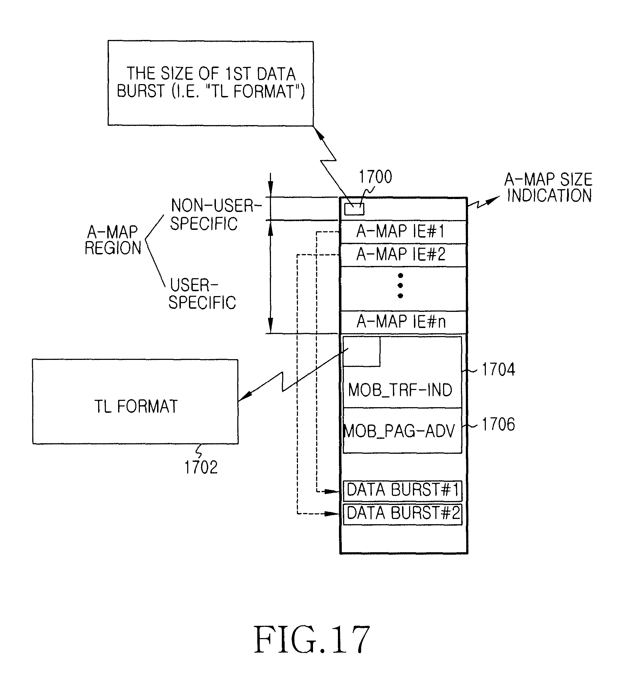

FIG. 17 is a diagram illustrating a frame for supporting simultaneous transmission of a plurality of broadcast management messages in a wireless communication system according to an exemplary embodiment of the present invention.

Referring to FIG. 17, a 'Non-user-specific' field within an A-MAP region of a subframe includes a field 1700 representing the size of a data burst existing right after the A-MAP region within the subframe, together with information for indicating the size of the A-MAP region. Here, the data burst existing right after the A-MAP region within the subframe has a variable size. Through the small data burst of variable size, a broadcast management message defining message 1702 for defining broadcast management messages 1704 and 1706 existing within the subframe is transmitted. In an exemplary implementation, the broadcast management message defining message 1702 is constructed in a TL format of Table 11 above. According to a value set in the field 1700, an MS can determine the size of the data burst existing right after the A-MAP region within the subframe. Also, through the broadcast management message defining message 1702, the MS can determine which and how many broadcast management messages exist within the subframe. By this, the MS can selectively perform decoding for the respective broadcast management messages existing within the subframe.

In another exemplary embodiment, a bit for indicating the existence or non-existence of a broadcast management message exists in a 'Non-user-specific' field within an A-MAP region. Through a small data burst existing right after the A-MAP region, a first broadcast management message defining message having the format of Table 12 below can be transmitted.

**Table 12**

| Syntax | Size (bit) | Notes |
|---|---|---|
| The number of Broadcast Management Messages | 4 | The number of broadcast management messages which are transmitted in the same subframe |
| bitmap | 2 | 1st bit : indicates the existence of MOB_TRF-IND |
| | | 2nd bit : indicates the existence of |
| | | MOB_PAG-ADV |

Here, the 'The number of Broadcast Management Messages' field represents the number of broadcast management messages existing within the subframe. The 'bitmap' field represents a bitmap for the existence or non-existence of each broadcast management message within the subframe. Each bit within the bitmap represents the existence or non-existence of a corresponding broadcast management message within the subframe. For example, in a case in which an MOB_TRF-IND message is allocated an MSB 1^{st} bit and an MOB_PAG-ADV message is allocated a 2^{nd} bit, if the MSB 1^{st} bit is set to '1', an MS can determine that the MOB_TRF-IND message exists within the subframe. And, if the 2^{nd} bit is set to '1', the MS determine that the MOB_PAG-ADV message exists within the subframe.

And, through a data burst of a variable size existing right after the small data burst, a second broadcast management message defining message having the format of Table 13 below can be transmitted.

**Table 13**

| Syntax | Size (bit) | Notes |
|---|---|---|
| For(i=0; i< The Number of Broadcast Management Messages;i++) { | | |
| Length | 10 | |
| } | | |
| Padding | | For byte alignment |

Here, the MS can guess the size of the data burst of the variable size according to a value set in the 'The number of Broadcast Management Messages' field. The 'Length' field represents the size of a broadcast management message. A first Length and a second Length are mapped to the broadcast management messages corresponding to the respective bits set to '1' within the bitmap. For example, if the bitmap is set to '11', the first Length means a Length of an MOB_TRF-IND message and the second Length means a Length of an MOB_PAG-ADV message. If the bitmap is set to '10', the first Length means the Length of the MOB_TRF-IND message and, from the second Length, it is used to indicate a Length of a broadcast management message other than the MOB_TRF-IND message and MOB_PAG-ADV message. If the bitmap is set to '01', the first Length means the Length of the MOB_PAG-ADV message and, from the second Length, it is used to indicate the Length of the broadcast management message other than the MOB_TRF-IND message and MOB_PAG-ADV message.

In a case in which a broadcast management message such as a mobile neighbor advertisement (MOB_NBR-ADV) message and a service identity information advertisement (SII-ADV) message exists within a subframe, a sleep mode MS and an idle mode MS all have to decode this broadcast management message. Thus, although not expressly informing of the existence or non-existence of the above broadcast management message, an MS must decode the broadcast management message. However, in a case in which an MOB_PAG-ADV message and an MOB_TRF-IND message, the sleep mode MS does not have to read the MOB_PAG-ADV message and the idle mode MS does not have to read the MOB_TRF-IND message. Thus, a separate bitmap can be provided as in Table 12 above to indicate the existence or non-existence of the MOB_PAG-ADV message and MOB_TRF-IND message.

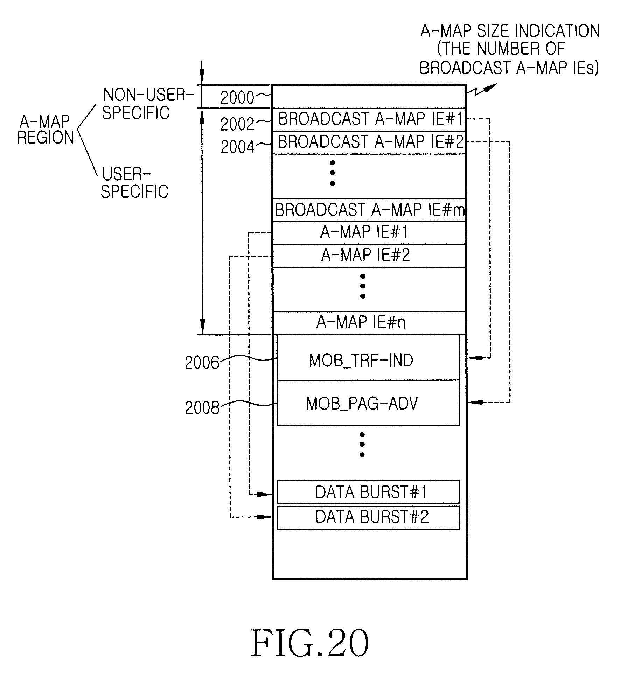

FIG. 20 is a diagram illustrating a frame for supporting simultaneous transmission of a plurality of broadcast management messages in a wireless communication system according to an exemplary embodiment of the present invention.

Referring to FIG. 20, a 'Non-user-specific' field 2000 within an A-MAP region of a subframe includes information on the number of Broadcast A-MAP IEs 2002 and 2004 included in the A-MAP region, together with information for indicating the size of the A-MAP region.

Here, the information on the number of the Broadcast A-MAP IEs 2002 and 2004 included in the A-MAP region is constructed in the format of Table 14 below.

**Table 14**

| Syntax | Size(bit) | Note |
|---|---|---|
| The number of Broadcast A-MAP IEs | 4 | Indicates the number of broadcast A-MAP IE to be included in A-MAP region |

Here, the 'The number of Broadcast A-MAP IEs' field represents the number of the Broadcast A-MAP IEs included in the A-MAP region. As many Broadcast A-MAP IEs as the number of the Broadcast A-MAP IEs are included in the A-MAP region. Here, the Broadcast A-MAP IE includes information on a corresponding broadcast management message.

In an exemplary implementation, the Broadcast A-MAP IEs 2002 and 2004 are constructed in the format of Table 15 below.

**Table 15**

| Syntax | Size(bit) | Note |
|---|---|---|
| Broadcast A-MAP IE format() { | | |
| | | 0b0000 : MOB_TRF-IND |
| Type | 4 | 0b0001: MOB_PAG-ADV |
| | | 0b0010 ∼ 0b1111 : Reserved |
| Length | 12 | The length of broadcast management message specified by Type field |
| } | | |

Here, the 'Type' field within the 'Broadcast A-MAP IE format' represents the type of a corresponding broadcast management message, and the 'Length' field represents the size of a corresponding broadcast management message.

The Broadcast A-MAP IEs 2002 and 2004 can take specific positions within the A-MAP region. For example, the Broadcast A-MAP IEs 2002 and 2004 can be positioned right after the 'Non-user-specific' field or right after the last A-MAP IE. The Broadcast A-MAP IEs 2002 and 2004 have fixed sizes and thus, an MS can determine positions and sizes of the Broadcast A-MAP IEs 2002 and 2004. Also, through a parameter included in the 'Non-user-specific' field, the MS can determine a position of the last A-MAP IE.

From right after the A-MAP region within the subframe, data bursts for transmission of broadcast management messages (i.e., an MOB_TRF-IND message 2006 and an MOB_PAG-ADV message 2008) exist. That is, the corresponding broadcast management messages 2006 and 2008 are positioned in data bursts right after the A-MAP region in sequence of the Broadcast A-MAP IEs 2002 and 2004 within the A-MAP region.

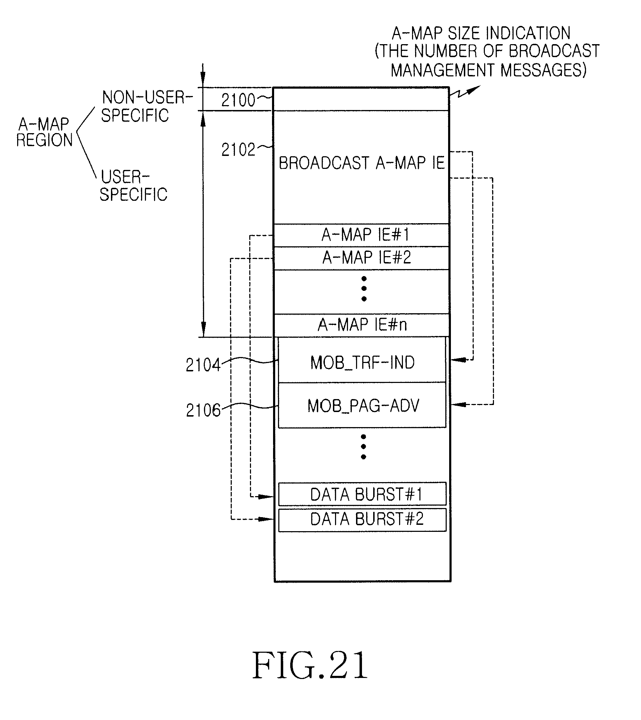

FIG. 21 is a diagram illustrating a frame for supporting simultaneous transmission of a plurality of broadcast management messages in a wireless communication system according to an exemplary embodiment of the present invention.

Referring to FIG. 21, a 'Non-user-specific' field 2100 within an A-MAP region of a subframe includes information on the number of broadcast management messages to position right after the A-MAP region, together with information for indicating the size of the A-MAP region.

In an exemplary implementation, the information on the number of broadcast management messages to position right after the A-MAP region is constructed in the format of Table 16 below.

**Table 16**

| Syntax | Size(bit) | Note |
|---|---|---|
| The number of Broadcast Management messages | 4 | Indicates the number of Broadcast Management message to be included right after A-MAP region |

Here, the 'The number of Broadcast Management Messages' field represents the number of broadcast management messages to position right after the A-MAP region.

Several Broadcast A-MAP IEs can be included in the A-MAP region as in FIG. 20, but, if several Broadcast A-MAP IEs are transmitted at the same MCS level, these can be constructed in the form of a single Broadcast A-MAP IE as in FIG. 21, not in the form of a plural Broadcast A-MAP IE. That is, a BS can at once include, in one Broadcast A-MAP IE 2102, information on as many several broadcast management messages as the 'The number of Broadcast Management Messages' field included in the 'Non-user-specific' field 2100 indicates.

In an exemplary implementation, the one Broadcast A-MAP IE 2102 is constructed in the format of Table 17 below.

**Table 17**

| Syntax | Size(bit) | Note |
|---|---|---|
| Broadcast A-MAP IE format() { | | |
| For(i=0; i< The number of Broadcast Management message; i++) { | | |
| | | 0b0000 : MOB_TRF-IND |
| Type | 4 | 0b0001: MOB_PAG-ADV |
| | | 0b0010 ∼ 0b1111 : Reserved |
| Length | 12 | The length of broadcast management message specified by Type field |
| } | | |
| } | | |

Here, the 'Type' field within the 'Broadcast A-MAP IE format' represents the type of a corresponding broadcast management message, and the 'Length' field represents the size of a corresponding broadcast management message. The number of the 'Type' field and 'Length' field is the same as the number of broadcast management messages, shown in the 'The number of Broadcast Management Messages' field of Table 16 above.

The Broadcast A-MAP IE 2102 can take a specific position within the A-MAP region. For example, the Broadcast A-MAP IE 2102 can be positioned right after the 'Non-user-specific' field or right after the last A-MAP IE. The Broadcast A-MAP IE 2102 has a fixed size and thus, an MS can determine a position and size of the Broadcast A-MAP IE 2102. Also, the MS can determine a position of the last A-MAP IE through a parameter included in the 'Non-user-specific' field.

From right after the A-MAP region within the subframe, data bursts for transmission of broadcast management messages (i.e., an MOB_TRF-IND message 2104 and an MOB_PAG-ADV message 2106) exist. That is, the corresponding broadcast management messages 2104 and 2106 are positioned in the data bursts right after the A-MAP region in sequence indicated by the 'Type' field and 'Length' field of the Broadcast A-MAP IE 2102 within the A-MAP region.

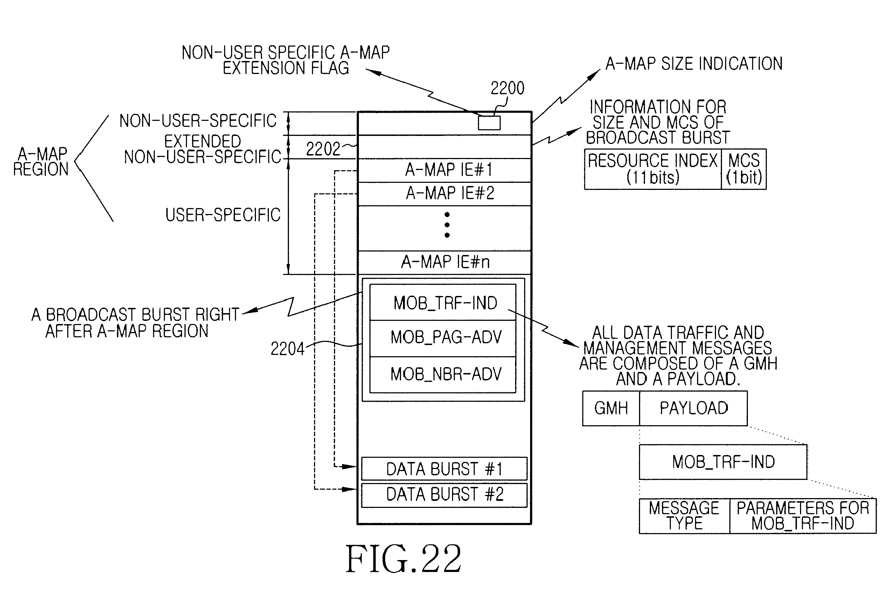

FIG. 22 is a diagram illustrating a frame for supporting simultaneous transmission of a plurality of broadcast management messages in a wireless communication system according to an exemplary embodiment of the present invention.

Referring to FIG. 22, a 'Non-user-specific' field within an A-MAP region of a subframe includes a Non-user-specific A-MAP extension flag (i.e., 1 bit) 2200 for indicating the existence or non-existence of an 'Extended Non-user-specific' field 2202 right after the 'Non-user-specific' field, together with information for indicating the size of the A-MAP region. If the Non-user-specific A-MAP extension flag 2200 is set to '1', the 'Extended Non-user-specific' field 2202 is positioned right after the 'Non-user-specific' field. An MCS used for the 'Extended Non-user-specific' field 2202 is the same as that of the 'Non-user-specific' field. On the other hand, if the Non-user-specific A-MAP extension flag 2200 is set to '0', the 'Extended Non-user-specific' field 2202 is not positioned right after the 'Non-user-specific' field.

The 'Extended Non-user-specific' field 2202 includes position and size information on a broadcast burst 2204 for transmission of one or more broadcast management messages. In the end, it can be said that the Non-user-specific A-MAP extension flag (i.e., 1 bit) 2200 representing the inclusion or non-inclusion of the 'Extended Non-user-specific' field 2202 is used to indicate the existence or non-existence of a broadcast management message in a corresponding subframe.

In an exemplary embodiment, the 'Extended Non-user-specific' field 2202 is constructed in the format of Table 18 below.

**Table 18**

| Syntax | Size | Notes |
|---|---|---|
| | (bit) | |
| Resource Index | 11 bits | This indicates the location and size of broadcast burst in a subframe which contains Broadcast management message(s) |
| MCS | 1 bit | This indicates the MCS level with which the broadcast burst is transmitted |

Here, the 'Resource Index' field within the 'Extended Non-user-specific' field 2202 means an index for indicating the position and size information of the broadcast burst 2204 for transmission of broadcast management messages (e.g., an MOB_TRF-IND message, an MOB_PAG-ADV message, an MOB_NBR-ADV message, etc.). Also, the 'MCS' field indicates an MCS level required for transmission of the broadcast burst 2204. In case of using MCS information transmitted to a SuperFrame Header (SFH), the 'MCS' field within the 'Extended Non-user-specific' field 2202 may be omitted.

As above, the position and size of the broadcast burst 2204 are determined by the 'Extended Non-user-specific' field 2202, and one or more Media Access Control Packet Data Units (MAC PDUs) (i.e., one or more broadcast management messages) are transmitted through the broadcast burst 2204. A length of each MAC PDU can be distinguished using a 'Length' field of a Generic Media Access Control (MAC) Header (GMH) constituting a corresponding MAC PDU.

On the other hand, the broadcast burst 2204 can be also allocated in an arbitrary position within the subframe using the 'Resource Index' field as above. However, the broadcast burst 2204 may be positioned right after the A-MAP region as in the aforementioned other exemplary embodiments. Also, although it is not certainly the A-MAP region, the broadcast burst 2204 may be positioned elsewhere on the basis of a specific region. In this case, in place of the 'Resource Index' field, a field including only the size information excepting the position information of the broadcast burst 2204 can be included in the 'Extended Non-user-specific' field 2202. For example, the 'Extended Non-user-specific' field 2202 may be replaced with a 'Length' field.

Also, according to realization, several methods proposed in several exemplary embodiments may be combined and used. For example, a bitmap mapped with each broadcast management message may be added to the 'Extended Non-user-specific' field 2202.

On the other hand, in FIG. 22, the 'Non-user-specific' field within the A-MAP region of the subframe includes the Non-user-specific A-MAP extension flag (i.e., 1 bit) 2200 for indicating if the 'Extended Non-user-specific' field 2202 exists after the 'Non-user-specific' field, together with information for indicating the size of the A-MAP region. If the Non-user-specific A-MAP extension flag 2200 is set to '1', the 'Extended Non-user-specific' field 2202 is positioned right after the 'Non-user-specific' field. This causes as many A-MAP IEs within the 'User-specific' field following the 'Extended Non-user-specific' field 2202 to be pushed out as the size of the 'Extended Non-user-specific' field 2202. As above, the A-MAP IEs within the 'User-specific' field can be varied in position according to the Non-user-specific A-MAP extension flag (i.e., 1 bit) 2200.

On the other hand, an error can occur in the 'Non-user-specific' field. That is, a bit error can occur according to a channel state. If an error occurs in the Non-user-specific A-MAP extension flag (i.e., 1 bit) 2200, an MS cannot perform proper detection of the A-MAP IEs within the 'User-specific' field because of erroneously determining a start point of the A-MAP IE, i.e., a position of a first A-MAP IE (i.e., an A-MAP IE #1 in FIG. 22) within the 'User-specific' field.

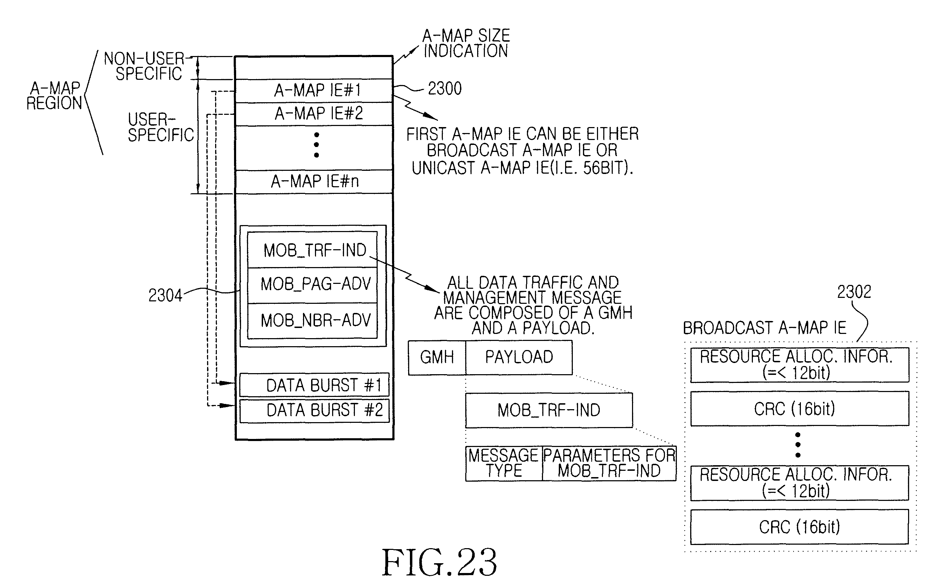

Thus, another exemplary embodiment of the present invention proposes a Broadcast A-MAP IE of an A-MAP IE form capable of determining an error or non-error without using the Non-user-specific A-MAP extension flag (i.e., 1 bit) 2200 and the 'Extended Non-user-specific' field 2202. This is described below in more detail with reference to FIG. 23.

FIG. 23 is a diagram illustrating a frame for supporting simultaneous transmission of a plurality of broadcast management messages in a wireless communication system according to an exemplary embodiment of the present invention.

Referring to FIG. 23, a 'Non-user-specific' field within an A-MAP region of a subframe includes information for indicating the size of the A-MAP region, and a 'User-specific' field includes a plurality of A-MAP IEs. Among the plurality of A-MAP IEs included in the 'User-specific' field, a first A-MAP IE (i.e., an A-MAP IE #1 in FIG. 23) 2300 is composed of either a Broadcast A-MAP IE or a Unicast A-MAP IE (i.e., 56 bits). The remaining A-MAP IEs are composed of Unicast A-MAP IEs, which include allocation information of data bursts transmitted to the remaining regions of the corresponding subframe.

On the other hand, the minimum coding rate for use in an A-MAP IE in the current IEEE 802.16m system is equal to 1/8. However, this is greater than the 1/12 minimum coding rate for use in an A-MAP IE in an IEEE 802.16e system. This causes difficulties in transmission of the A-MAP IE in the IEEE 802.16m system to MSs at a cell boundary. So, an exemplary embodiment of the present invention proposes a way to apply a plurality of repetition to data intended for transmission, to generate a Broadcast A-MAP IE. That is, through the repetition, the minimum coding rate 1/8 is supplemented and changed to be 1/12 or below. Here, the number of times of repetition (e.g., twice) is determined according to the size of a 'Resource allocation Information' field within a Broadcast A-MAP IE 2302. Here, the 'Resource allocation Information' field indicates a position and size of a broadcast burst 2304. For instance, in a case in which the size of the 'Resource allocation Information' field is 12 bits, a 'Cyclic Redundancy Check (CRC)' field of a 16-bit size can be added to generate a Broadcast A-MAP IE 2302 of a 28-bit size. Here, if a repetition of two times is implemented at a symbol or bit level, the Broadcast A-MAP IE 2302 becomes 168 tones and thus has the same size as a different A-MAP IE making use of the minimum coding rate 1/8. If lengths of the 'Resource allocation Information' field (e.g., a 12-bit size) and the 'CRC' field (e.g., a 16-bit size) do not become divisors of 56 bits, for example, if they become less than 28 bits, parameters representing part of functions proposed in the several exemplary embodiments may be included in the remaining bits within the Broadcast A-MAP IE 2302. For instance, as information on the type of a broadcast management message, each 1 bit for indicating the existence or non-existence of an MOB_TRF-IND message for a sleep mode MS, the existence or non-existence of an MOB_PAG-ADV message for an idle mode MS, and the existence or non-existence of other messages may be included in the broadcast burst.

In an exemplary implementation, the Broadcast A-MAP IE 2302 is constructed in the format of Table 19 below.

**Table 19**

| Syntax | Size (bit) | Notes |
|---|---|---|
| Resource allocation Information | X bit | It may be the same as Resource Index. This indicates the location and size of broadcast burst in a subframe which contains Broadcast management message(s) |
| CRC | M bit | |

Here, the 'Resource allocation Information' field within the Broadcast A-MAP IE 2302 indicates the position and size of the broadcast burst 2304. The 'CRC' field includes information for determining an error or non-error of the Broadcast A-MAP IE 2302 and can have, for example, a size of 16 bits.

The size of the Broadcast A-MAP IE 2302 becomes a divisor of a size of a Unicast A-MAP IE, and the Broadcast A-MAP IE 2302 is repeated to have the same number of tones as the Unicast A-MAP IE. However, the Unicast A-MAP IE is scrambled by a BS using a Station ID (STID), which is an MS' own identifier. A corresponding MS descrambles the Unicast A-MAP IE using the STID to distinguish if the Unicast A-MAP IE is an A-MAP IE for the MS. Unlike this, the Broadcast A-MAP IE is an A-MAP IE that all MSs have to receive and therefore, is scrambled by the BS using a Broadcasting STID (e.g., Oxffff) not the MS's own STID. All MSs descramble the Broadcast A-MAP IE by the Broadcasting STID.

As described earlier, the Broadcast A-MAP IE can be positioned in the first A-MAP IE (i.e., the A-MAP IE #1 in FIG. 23) 2300 among the plurality of A-MAP IEs included in the 'User-specific' field. That is, in case that a broadcast management message to transmit through a corresponding subframe exists, a BS includes the Broadcast A-MAP IE instead of the Unicast A-MAP IE in the position of the first A-MAP IE 2300 in order to inform all MSs of the position and size information on the broadcast burst for transmission of corresponding broadcast management messages. If the broadcast management message to transmit through the corresponding subframe does not exist, the BS includes the Unicast A-MAP IE from the position of the first A-MAP IE 2300.

An MS cannot be aware of which one of the Broadcast A-MAP IE and the Unicast A-MAP IE is included in the position of the first A-MAP IE 2300. Thus, the MS first performs decoding using a defined repetition recursion and channel coding rate, and descrambles the first A-MAP IE 2300 using a Broadcasting STID. If the result is that the Broadcast A-MAP IE is successfully detected, the MS determines a position and size of a broadcast burst using the corresponding Broadcast A-MAP IE, and extracts a broadcast management message within a corresponding subframe on the basis of the determined position and size. If the Broadcast A-MAP IE is not successfully detected, in order to determine whether a corresponding A-MAP IE is an A-MAP IE unicasted to the MS, the MS descrambles the corresponding A-MAP IE using an MS's own STID, which is allocated to the MS in a network entry process. For reference, because an idle mode MS has no reason to receive the Unicast A-MAP IE from the BS, in order to determine if the Broadcast A-MAP IE exists, the idle mode MS performs only descrambling of the first A-MAP IE 2300 using the Broadcasting STID.

In another exemplary embodiment, in FIG. 23, a 'Non-user-specific' field within an A-MAP region of a subframe can include a flag (i.e., 1 bit) for indicating if a Broadcast A-MAP IE exists in a 'User-specific' field, together with information for indicating the size of the A-MAP region. That is, the 'Non-user-specific' field can include the flag (i.e., 1 bit) for indicating if a first A-MAP IE (i.e., an A-MAP IE#1 in FIG. 23) 2300 among a plurality of A-MAP IEs included in the 'User-specific' field is composed of the Broadcast A-MAP IE. In this case, if the flag is set to '1', among the plurality of A-MAP IEs included in the 'User-specific' field, the first A-MAP IE (i.e., the A-MAP IE #1 in FIG. 23) 2300 is composed of the Broadcast A-MAP IE. Thus, an MS descrambles the first A-MAP IE 2300 using a Broadcasting STID and thus, extracts a broadcast management message within a corresponding subframe on the basis of a determined position and size of a broadcast burst. On the other hand, if the flag is set to '0', among the plurality of A-MAP IEs included in the 'User-specific' field, the first A-MAP IE (i.e., the A-MAP IE #1 in FIG. 23) 2300 is composed of the Unicast A-MAP IE. Thus, the MS descrambles a corresponding A-MAP IE using its own STID allocated in a network entry process.

Also, according to realization, several methods proposed in several exemplary embodiments can be also combined and used. For example, as information on the type of a broadcast management message, a bitmap mapped with each broadcast management message may be added to the Broadcast A-MAP IE 2302.

On the other hand, in most exemplary embodiments of the present invention, it is assumed that an MCS level necessary to decode a small data burst is predefined. Also, it is assumed that an MCS level necessary to decode a data burst through which broadcast management messages are transmitted is predefined. Assuming that the MCS level is not predefined, a broadcast management message defining message proposed by exemplary embodiments of the present invention must further include an MCS information field representing an MCS level used for transmission of a corresponding broadcast management message.

Also, according to exemplary embodiments of the present invention, a broadcast management message defining message includes a 'Type' field. The 'Type' field represents the type of a broadcast management message. By identifying the 'Type' field, an MS can perform selective decoding of a broadcast management message without unnecessary decoding. In the broadcast management message defining message, the 'Type' field can be omitted. In this case, an MS identifies the size of each broadcast management message using a 'Length' field and then can distinguish broadcast management messages using a 'Message Type' field positioned in front within a payload of a corresponding broadcast management message within each broadcast management message.

Also, according to exemplary embodiments of the present invention, a broadcast management message defining message includes a 'Length' field. The 'Length' field represents a length of a broadcast management message. By identifying the 'Length' field, an MS can determine a length of each broadcast management message. However, in a case in which an MCS level necessary to transmit a broadcast management message is determined, the MS can inversely derive the size of a resource (i.e., a data burst) for transmitting the broadcast management message. Therefore, instead of the 'Length' field, size information of the data burst to actually transmit the broadcast management message can be included. For instance, the broadcast management message defining message can include information on the number of necessary Logical Resource Units (LRUs) instead of the 'Length' field.

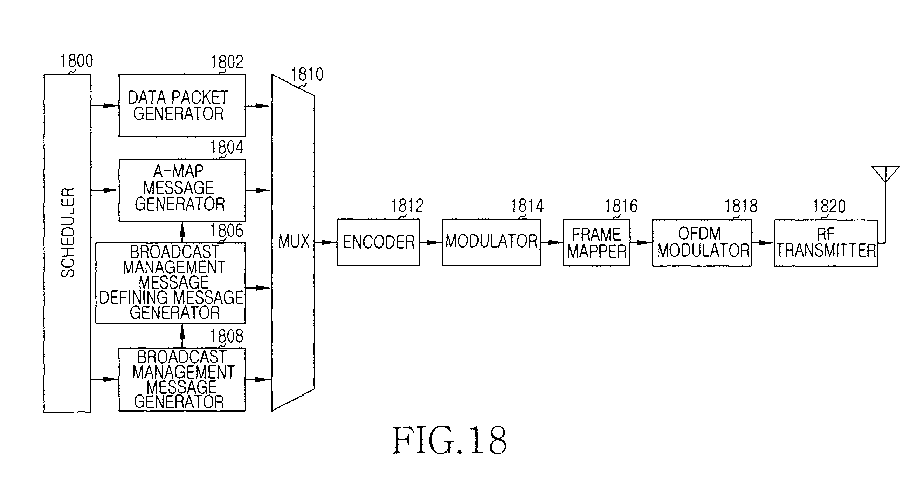

FIG. 18 is a block diagram illustrating a construction of a BS in a wireless communication system according to an exemplary embodiment of the present invention.

As illustrated in FIG. 18, the BS includes a scheduler 1800, a data packet generator 1802, an A-MAP message generator 1804, a broadcast management message defining message generator 1806, a broadcast management message generator 1808, a multiplexer (MUX) 1810, an encoder 1812, a modulator 1814, a frame mapper 1816, an Orthogonal Frequency Division Multiplexing (OFDM) modulator 1818, and a Radio Frequency (RF) transmitter 1820.

The scheduler 1800 performs resource scheduling for frame communication.

The data packet generator 1802 generates data packets to transmit according to the resource scheduling result of the scheduler 1800.

The A-MAP message generator 1804 generates an A-MAP IE including resource allocation information according to the resource scheduling result of the scheduler 1800. According to an exemplary embodiment of the present invention, in case that a broadcast management message to transmit through a corresponding subframe exists, the A-MAP message generator 1804 can construct, as a Broadcast A-MAP IE, a first A-MAP IE among a plurality of A-MAP IEs included in a 'User-specific' field. Accordingly, through the Broadcast A-MAP IE, an MS can be aware of allocation information (i.e., information on a position and size) of a broadcast burst for transmission of corresponding broadcast management messages.

According to an exemplary embodiment of the present invention, the broadcast management message defining message generator 1806 generates a broadcast management message defining message for defining a broadcast management message generated by the broadcast management message generator 1808. Also, according to another exemplary embodiment of the present invention, the broadcast management message defining message generator 1806 can provide information of a short bit for defining a broadcast management message to the A-MAP message generator 1804 to allow the A-MAP message generator 1804 to output the information of the short bit together with an A-MAP IE.

In a case in which it is determined that transmission of a broadcast management message is required according to the resource scheduling result of the scheduler 1800, the broadcast management message generator 1808 generates the broadcast management message.

The multiplexer 1810 forwards messages (or packets) from the data packet generator 1802, the A-MAP message generator 1804, the broadcast management message defining message generator 1806, and the broadcast management message generator 1808, to the encoder 1812 of a physical layer.

The encoder 1812 of the physical layer encodes the messages (or the packets) from the multiplexer 1810 according to a defined coding scheme (e.g., a code type, a coding rate, etc.).

The modulator 1814 modulates coded bits from the encoder 1812 according to a modulation scheme, and generates modulation symbols.

The frame mapper 1816 arranges the modulation symbols from the modulator 1814 according to a predefined frame structure, and outputs the arranged frame data to the OFDM modulator 1818.

The OFDM modulator 1818 OFDM-modulates the data from the frame mapper 1816 and generates time-domain sample data. Here, the OFDM modulation includes an Inverse Fast Fourier Transform (IFFT) operation, a Cyclic Prefix (CP) addition, etc.

The RF transmitter 1820 converts sample data from the OFDM modulator 1818 into an analog signal, converts the converted analog signal into an RF band signal, and transmits the RF band signal through an antenna.

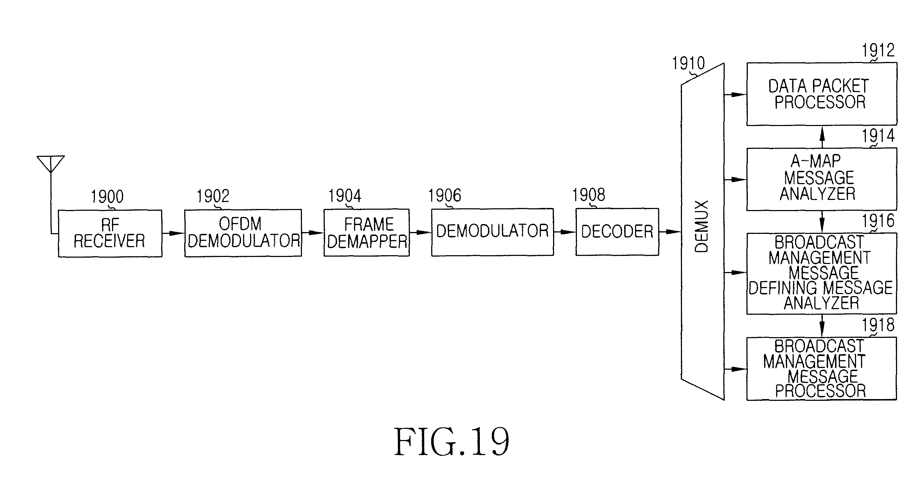

FIG. 19 is a block diagram illustrating a construction of an MS in a wireless communication system according to an exemplary embodiment of the present invention.

As illustrated in FIG. 19, the MS includes an RF receiver 1900, an OFDM demodulator 1902, a frame demapper 1904, a demodulator 1906, a decoder 1908, a demultiplexer (DEMUX) 1910, a data packet processor 1912, an A-MAP message analyzer 1914, a broadcast management message defining message analyzer 1916, and a broadcast management message processor 1918.

The RF receiver 1900 converts a received RF band signal into a baseband signal, and converts the converted baseband signal into digital sample data.

The OFDM demodulator 1902 OFDM-demodulates the sample data from the RF receiver 1900 and outputs frequency domain data. Here, the OFDM demodulation includes CP elimination, Fast Fourier Transform (FFT) operation, etc.

The frame demapper 1904 extracts packets (i.e., control information packets, data packets, etc.) from frame data from the OFDM demodulator 1902, and arranges and outputs the extracted packets.

The demodulator 1906 demodulates the packets from the frame demapper 1904.

The decoder 1908 decodes the demodulated data from the demodulator 1906.

The demultiplexer 1910 forwards the decoded data from the decoder 1908 to the data packet processor 1912, the A-MAP message analyzer 1914, the broadcast management message defining message analyzer 1916, and the broadcast management message processor 1918.

The data packet processor 1912 processes data packets from the demultiplexer 1910 according to a defined protocol.

The A-MAP message analyzer 1914 analyzes an A-MAP IE from the demultiplexer 1910 according to the standard, and provides resource allocation information acquired through the A-MAP IE to the data packet processor 1912. At this time, the data packet processor 1912 can extract its own data packets from a data burst using the resource allocation information. According to an exemplary embodiment of the present invention, the A-MAP message analyzer 1914 descrambles a first A-MAP IE among a plurality of A-MAP IEs included in a 'User-specific' field, using a Broadcasting STID. If the descrambling result using the Broadcasting STID is that the Broadcast A-MAP IE is successfully detected, the A-MAP message analyzer 1914 acquires allocation information (i.e., information on a position and size) of a broadcast burst using the corresponding Broadcast A-MAP IE, and provides the acquired allocation information of the broadcast burst to the broadcast management message processor 1918. At this time, the broadcast management message processor 1918 can extract a broadcast management message within a corresponding subframe on the basis of the allocation information (i.e., the information on the position and size) of the broadcast burst. If the descrambling result is that the Broadcast A-MAP IE is not successfully detected, the A-MAP message analyzer 1914 descrambles a corresponding A-MAP IE using an MS's own STID allocated in a network entry process. If the descrambling result using the MS's own STID is that a corresponding A-MAP IE is successfully detected, the A-MAP message analyzer 1914 provides resource allocation information acquired using the corresponding A-MAP IE to the data packet processor 1912. At this time, the data packet processor 1912 can extract its own data packets from a data burst using the resource allocation information.

According to an exemplary embodiment of the present invention, the broadcast management message defining message analyzer 1916 analyzes a broadcast management message defining message from the demultiplexer 1910, and provides broadcast management message related information acquired through the broadcast management message defining message to the broadcast management message processor 1918. At this time, the broadcast management message processor 1918 can extract a broadcast management message whose reception is required from a data burst, using the broadcast management message related information.

The broadcast management message processor 1918 processes the broadcast management message from the demultiplexer 1910.

As described above, an exemplary embodiment of the present invention has an advantage that an MS can determine a position and size of a broadcast burst for transmission of a broadcast management message within a subframe, by constructing, as a Broadcast A-MAP IE, a first A-MAP IE among a plurality of A-MAP IEs included in a 'User-specific' field and indicating allocation information (i.e., information on a position and size) of a broadcast burst through a Broadcast A-MAP IE in a wireless communication system. This makes simultaneous transmission of a plurality of broadcast management messages possible while using less overhead.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method in a Base Station (BS) for supporting transmission of a broadcast management message in a wireless communication system, the method comprising:
generating one or more broadcast management messages whose transmission is required; and
constructing an Advanced-MAP Information Element (A-MAP IE) of a number, which is predefined on the basis of a predefined position within a subframe, as a Broadcast A-MAP IE,
wherein the Broadcast A-MAP IE comprises allocation information of a broadcast burst for transmission of the generated one or more broadcast management messages.

2. An apparatus in a Base Station (BS) for supporting transmission of a broadcast management message in a wireless communication system, the apparatus comprising:
a broadcast management message generator for generating one or more broadcast management messages whose transmission is required; and
an Advanced (A)-MAP message generator for constructing an A-MAP Information Element (IE) of a number, which is predefined on the basis of a predefined position within a subframe, as a Broadcast A-MAP IE,
wherein the Broadcast A-MAP IE comprises allocation information of a broadcast burst for transmission of the generated one or more broadcast management messages.

3. The method of claim 1 or the apparatus of claim 2, wherein the A-MAP IE of the number predefined on the basis of the predefined position within the subframe comprises a first A-MAP IE among a plurality of A-MAP IEs, which are comprised in a 'User-specific' field within an A-MAP region of the subframe.

4. The method of claim 1 or the apparatus of claim 2, further comprising:
determining the existence or non-existence of one or more broadcast management messages whose transmission is required; and
when determining the non-existence of the one or more broadcast management messages whose transmission is required, constructing the entire A-MAP IE within the subframe as a Unicast A-MAP IE,
wherein the Unicast A-MAP IE comprises allocation information of a data burst for transmission of data packets.

5. The method of claim 1 or the apparatus of claim 2, further comprising:
scrambling the Broadcast A-MAP IE using a predefined Broadcasting Station ID (STID); and
transmitting the scrambled Broadcast A-MAP IE to a Mobile Station (MS).

6. The method of claim 1 or the apparatus of claim 2, wherein the Broadcast A-MAP IE comprises at least one of information on a position and size of the broadcast burst, Cyclic Redundancy Check (CRC) information for determining an error or non-error of the Broadcast A-MAP IE, and information on the type of a broadcast management message.

7. The method or apparatus of claim 6, wherein the information on the type of the broadcast management message comprises one of each bit for indicating the existence or non-existence of each broadcast management message within the subframe and a bitmap for indicating the existence or non-existence of each broadcast management message within the subframe.

8. The method of claim 1 or the apparatus of claim 2, wherein the broadcast management message comprises a Generic Media Access Control (MAC) Header (GMH) representing a length of a corresponding broadcast management message.

9. A method in a Mobile Station (MS) for receiving a broadcast management message in a wireless communication system, the method comprising:
detecting a Broadcast Advanced-MAP Information Element (A-MAP IE) by descrambling an A-MAP IE of the number, which is predefined on the basis of a predefined position within a subframe, using a predefined Broadcasting Station ID (STID); and
if the Broadcast A-MAP IE is successfully detected, extracting one or more broadcast management messages within the subframe on the basis of the detected Broadcast A-MAP IE,
wherein the Broadcast A-MAP IE comprises allocation information of a broadcast burst for transmission of the one or more broadcast management messages.

10. An apparatus in a Mobile Station (MS) for receiving a broadcast management message in a wireless communication system, the apparatus comprising:
an Advanced (A)-MAP message analyzer for detecting a Broadcast A-MAP Information Element (IE) by descrambling an A-MAP IE of a number, which is predefined on the basis of a predefined position within a subframe, using a predefined Broadcasting Station ID (STID); and
a broadcast management message processor for, when the Broadcast A-MAP IE is successfully detected, extracting one or more broadcast management messages within the subframe on the basis of the detected Broadcast A-MAP IE,
wherein the Broadcast A-MAP IE comprises allocation information of a broadcast burst for transmission of the one or more broadcast management messages.

11. The method of claim 9 or the apparatus of claim 10, wherein the A-MAP IE of the number predefined on the basis of the predefined position within the subframe comprises a first A-MAP IE among a plurality of A-MAP IEs comprised in a 'User-specific' field within an A-MAP region of the subframe.

12. The method of claim 9 or the apparatus of claim 10, further comprising, when the Broadcast A-MAP IE is not successfully detected, detecting a Unicast A-MAP IE by descrambling the A-MAP IE using an MS's own STID.

13. The method of claim 9 or the apparatus of claim 10, wherein the Broadcast A-MAP IE comprises at least one of information on a position and size of the broadcast burst, Cyclic Redundancy Check (CRC) information for determining an error or non-error of the Broadcast A-MAP IE, and information on the type of a broadcast management message.

14. The method or apparatus of claim 13, wherein the information on the type of the broadcast management message comprises one of each bit for indicating the existence or non-existence of each broadcast management message within the subframe and a bitmap for indicating the existence or non-existence of each broadcast management message within the subframe.

15. The method of claim 9 or the apparatus of claim 10, wherein the broadcast management message comprises a Generic Media Access Control (MAC) Header (GMH) representing a length of a corresponding broadcast management message.
